# EUROPÄISCHE PATENTSCHRIFT

(11) **EP 0 662 992 B1**
(45) Veröffentlichungstag und Bekanntmachung des Hinweises auf die Patenterteilung: **29.07.1998**
(21) Anmeldenummer: 93920796.5
(22) Anmeldetag: 22.09.1993
(51) Int. Cl.: C09D 7/14, C09D 175/04, C09D 151/00, C09D 17/00

(54) **MISCHSYSTEM ZUR HERSTELLUNG WASSERVERDÜNNBARER ÜBERZUGSMITTEL**
MIX SYSTEM FOR PRODUCING WATER-DILUTABLE COATING AGENTS
SYSTEME MIXTE POUR LA FABRICATION D'AGENTS DE REVETEMENT DILUABLES A L'EAU

(30) Priorität: 30.09.1992 DE 4232721
(43) Veröffentlichungstag der Anmeldung: 19.07.1995
(73) Patentinhaber: BASF Coatings Aktiengesellschaft, 48165 Münster (DE)
(72) Erfinder: MAYER, Bernd, D-48165 Münster (DE); MEISENBURG, Uwe, D-47053 Duisburg (DE); RINK, Heinz-Peter, D-48153 Münster (DE)
(86) Internationale Anmeldenummer: EP9302563
(87) Internationale Veröffentlichungsnummer: WO9407960

(56) Entgegenhaltungen:
- EP-A- 0 052 224
- EP-A- 0 121 308
- EP-A- 0 311 209

## Beschreibung

Gegenstand der vorliegenden Erfindung ist ein Mischsystem zur Herstellung von wasserverdünnbaren Überzugsmitteln mit genau festgelegter Tönung aus verschiedenen Basisfarben.
Die vorliegende Erfindung betrifft außerdem ein Verfahren zur Herstellung dieser Überzugsmittel mit genau festgelegter Tönung, bei dem verschiedene Basisfarben getrennt gelagert und erst kurz vor der Applikation zu dem Überzugsmittel in dem gewünschten Farbton gemischt werden.
Ferner betrifft die vorliegende Erfindung noch die Verwendung des Mischsystems zur Herstellung von Wasserbasislacken für die Beschichtung von Automobilkarossen und/oder Kunststoffteilen sowie zur Herstellung von wäßrigen Überzugsmitteln für die Reparaturlackierung.
Übliche Verfahren zur Ausbesserung von Schadstellen an einer gegebenenfalls mehrschichtigen Lackierung beinhalten die sorgfältige Reinigung und Schleifen, ggf. Spachteln und Füllern an der Schadstelle. Danach wird die Schadstelle ggf. nach einer weiteren Vorbehandlung üblicherweise deckend und auslaufend in die angrenzenden Bereiche hinein mit Effektlacken, wie z.B. Metallicbasislacken, oder mit Unilacken gespritzt. Nach Antrocknung des so hergestellten Überzuges werden der Überzug und die angrenzenden Teile mit einem Klarlack überspritzt, und nach einer ggf. notwendigen Ablüftzeit wird der Klarlacküberzug gemeinsam mit den vorher aufgebrachten Schichten vorzugsweise bei Temperaturen zwischen 50 und 100 °C getrocknet.
Als Effekt-Lacke und/oder im Zweischichtverfahren aufgebrachte Unilacke für das Ausbessern von Schadstellen werden üblicherweise festkörperarme Lacke verwendet, die neben Bindemitteln farb- und/oder effektgebende Pigmente und einen hohen Anteil organischer Lösemittelgemische enthalten.
Diese Lacke werden entweder vom Lackhersteller im gewünschten Farbton geliefert, oder der Farbton wird vor der Applikation aus einem Mischsystem mehrerer Basisfarben hergestellt. Diese Herstellung aus einem Mischsystem hat den Vorteil, daß nicht jeder Farbton einzeln hergestellt und bevorratet werden muß und daß somit Produktions-, Distributions- und Lagerhaltungskosten gesenkt werden können. In beiden Fällen ist es notwendig, daß die gelieferten Lacke eine ausreichende Lagerstabilität (mindestens 12 Monate) aufweisen. Für ein Mischsystem hat außerdem die Farbtongenauigkeit der Basisfarben eine große Bedeutung.

Während im Bereich der Serienlackierung zunehmend wasserverdünnbare Basislacke eingesetzt werden, werden im Bereich der Autoreparaturlackierung noch konventionelle, d.h. lösemittelhaltige, Basislacke eingesetzt. Diese bisher für die Reparaturlackierung verwendeten festkörperarmen Basislacke haben eine von den bisher für die Serienlackierung verwendeten wasserverdünnbaren Basislacken deutlich verschiedene Zusammensetzung. So erfolgt beispielsweise die Rheologiesteuerung bei den konventionellen Systemen zum größten Teil über die Verdunstungsgeschwindigkeit der organischen Lösemittel (Festkörperanstieg zwischen Applikationsgerät und zu lackierendem Objekt), während bei den wäßrigen Systemen die Rheologiesteuerung durch externe Verdickungsmittel oder durch entsprechende Modifikationen im Bindemittel erfolgt. Für den Übergang von konventionellen zu wasserverdünnbaren Systemen ist daher ein bloßer Austausch der verwendeten Bindemittel gegen wasserverdünnbare Bindemittel nicht ausreichend. Auch der Einsatz der im Bereich der Serienlackierung verwendeten wasserverdünnbaren Systeme im Bereich der Reparaturlackierung ist aufgrund der unterschiedlichen Anforderungen an die Systeme in beiden Bereichen zur Zeit nicht möglich. Die für die Serienlackierung (Fahrzeugerstlackierung) verwendeten wasserverdünnbaren Metallic-Basislacke weisen nämlich keine für den Bereich der Reparaturlackierung ausreichende Lagerstabilität auf, da bei diesen wasserverdünnbaren Lacken Probleme bei der Gasungsstabilität (H₂-Bildung durch Reaktion von Wasser mit der Aluminiumbronze) und/oder Effektstabilität auftreten. Beides beeinträchtigt nachhaltig den Farbton bzw. die Aufsichthelligkeit der resultierenden Beschichtungen. Daher sind diese Systeme in der Reparaturlackierung nicht zum Einsatz gekommen.

Aber nicht nur Effektpigmente enthaltende wasserverdünnbare Lacke zeigen Probleme hinsichtlich der Lagerstabilität. Auch farbgebende Pigmente können durch längere Einwirkung von Wasser, z. B. in alkalischem Medium, angegriffen werden. Um keiner zu großen Einschränkung bei der Auswahl der handelsüblichen Pigmente zu unterliegen, besteht auch ein Bedarf für die Formulierung von lagerstabilen Basisfarben mit diesen farbgebenden Pigmenten.

Aus wirtschaftlichen Gründen, zur Verbesserung der Arbeitssicherheit (Brandschutz) und zur Verringerung der Umweltbelastung beim Trocknen der Lackfilme ist man auch im Bereich der Reparaturlackierung bemüht, organische Lösemittel in den Überzugsmitteln so weit wie möglich zu reduzieren. Die mangelnde Lagerstabilität der bekannten wasserverdünnbaren Basislacke verhinderte jedoch bisher den Aufbau eines oben beschriebenen Mischsystems aus derartigen wasserverdünnbaren Basislacken.

Aus der EP-A-320 552 ist nun ein Verfahren zur Herstellung eines mehrschichtigen Überzugs bekannt, bei dem auf das mit einem Füller versehene Substrat zunächst eine wäßrige, bevorzugt Metallicpigmente enthaltende Überzugszusammensetzung aufgebracht und getrocknet wird, ehe ein üblicher Wasserbasislack und anschließend ein Klarlack aufgebracht werden. Durch die Applikation der wäßrigen Überzugszusammensetzung vor der Basecoat/Clearcoat-Beschichtung soll eine Verbesserung des Metalliceffektes, insbesondere der Aufsichthelligkeit, erreicht werden.
Dieses in der EP-A-320 552 beschriebene Verfahren ist hauptsächlich für die Herstellung einer Erstlackierung geeignet, jedoch wird in der Beschreibung auch auf die Möglichkeit hingewiesen, dieses Verfahren im Bereich der Reparaturlackierung einzusetzen.

Die in dem Verfahren der EP-A 320 552 eingesetzten wäßrigen Überzugszusammensetzung werden durch Einarbeiten einer Aluminiumpigmentpaste in wäßrige Mischlacke hergestellt. Die verwendete Aluminiumpaste stellt dabei eine Anteigung von Aluminium-Bronze in organischen Lösemitteln und einem Emulgator dar. Diese Aluminiumpaste setzt aber schon innerhalb weniger Stunden ab und führt so zu Bodensatz. Dies wiederum führt aber regelmäßig zu Farbtonabweichungen. Diese abgesetzte Paste ist nur bedingt mit geeigneten Rühraggregaten aufrührbar. Außerdem stehen Lackierern in der Regel derartige Rühraggregate nicht zur Verfügung. Derartige Aluminiumpasten sind daher für den Aufbau von Mischsystemen für die Reparaturlackierung nicht geeignet.

Auch die nach Einarbeitung der Aluminiumpaste in die wäßrigen Mischlacke erhaltenen wäßrigen Überzugs zusammensetzungen zeigen eine unzureichende Lagerstabilität, die nicht den Anforderungen der Lackierer genügt.

Weiterhin sind aus der EP-A-195 931 und der EP-A-297 576 wäßrige Überzugsmittel für die Herstellung eines Mehrschichtüberzuges im Bereich der Serienlackierung bekannt. Die Herstellung der wäßrigen Überzugsmittel erfolgt durch Einarbeitung einer Pigmentpaste in die wäßrige Bindemitteldispersion. Die Pigmentpaste wird dabei durch Anreiben der entsprechenden Pigmente mit möglichst geringen Mengen eines Anreibeharzes sowie ggf. mit organischen Lösemitteln und ggf. mit Wasser hergestellt. Der Aufbau eines Mischsystems für den Bereich der Reparaturlackierung und die hierfür erforderlichen Maßnahmen, wie zum Beispiel die getrennte Lagerung einzelner Komponenten, sind jedoch in der EP-A-195 931 und der EP-A-297 576 nicht beschrieben. Die pigmentierten wäßrigen Überzugsmittel selbst sind dabei aufgrund der unzureichenden Lagerstabilität nicht für den Bereich der Reparaturlackierung geeignet.

Auch aus der EP-B-38 127 sind wäßrige Überzugsmittel für die Herstellung eines Mehrschichtüberzuges im Bereich der Serienlackierung bekannt. Die Herstellung der wäßrigen Überzugsmittel erfolgt wiederum durch Einarbeiten einer Pigmentpaste in die wäßrige Bindemitteldispersion. Die Pigmentpaste wird dabei durch Anreiben der Pigmente mit einem Melaminharz sowie organischen Lösemitteln hergestellt. Der Aufbau eines Mischsystmes für den Bereich der Reparaturlackierung und die hierfür erforderlichen Maßnahmen sind aber wiederum nicht beschrieben. Auch diese pigmentierten wäßrigen Überzugsmittel der EP-B-38 127 sind aufgrund einer unzureichenden Lagerstabilität nicht für den Bereich der Reparaturlackierung geeignet.

In der EP-A-368 499 sind wasserverdünnbare, insbesondere Metallicpigmente enthaltende Beschichtungsmassen mit einer verbesserten Lagerstabilität beschrieben. Die Lagerstabilität wird dadurch erzielt, daß zunächst eine wasserfreie Bindemittellösung aus 25 bis 95 Gew.-% eines Polyether- bzw. Polyesterpolyols, 2,5 bis 50 Gew.-% eines Aminoplastharzes und 0 bis 50 Gew.-% eines organischen Lösemittels hergestellt wird, in die die Pigmente eingearbeitet werden. Diese Bindemittel lösung wird kurz vor der Applikation mit Wasser auf die jeweils gewünschte Viskosität eingestellt.

In der EP-A-368 499 ist die Verwendung der wasserfreien Bindemittel lösungen in einem Mischsystem nicht beschrieben. Außerdem ist die Verwendung der Beschichtungsmassen der EP-A-368 499 unter Reparaturbedingungen nicht möglich, da der hohe Polyether/Polyester-Anteil nicht zu ausreichend wasserfesten Filmen führt. Ferner ist der erreichte metallische Effekt bei weitem nicht ausreichend für die Fahrzeugerst- oder -reparaturlackierung.

Schließlich ist es aus dem Zeitschriftenartikel von Hauska und Racz in Farbe und Lack, 93. Jahrgang, Heft 2, 1987, Seiten 103 bis 105 bekannt, die Lagerstabilität von wäßrigen Farbdispersionen u.a. dadurch zu verbessern, daß zur Herstellung der wäßrigen Farbdispersionen Aluminiumpasten eingesetzt werden, die neben Aluminiumpigment ein Bindemittel enthalten, das mit dem Aluminiumpigment mischbar und vor dem Verbrauch mit Wasser verdünnbar ist. Die in diesem Zeitschriftenartikel für die Herstellung der Aluminiumpaste genannten Bindemittel eignen sich jedoch nicht für den Einsatz in wäßrigen Überzugsmittel für den Bereich der Autoreparaturlackierung. Entsprechend wird auch bereits in dem Zeitschriftenartikel festgestellt, daß diese Methode keine industrielle Bedeutung hat. Außerdem sind auch in diesem Zeitschriftenartikel der Aufbau eines Mischsystems sowie die hierfür erforderlichen Maßnahmen nicht beschrieben.

Aus der nicht vorveröffentlichten deutschen Anmeldung P 41 10 520.6 ist ein Mischsystem zur Herstellung von wasserverdünnbaren Überzugsmitteln mit festgelegter Tönung aus verschiedenen Basisfarben bekannt, wobei das Mischsystem weitgehend wasserfreie Basisfarben aus Basis wasserverdünnbarer oder wasserdispergierbarer Bindemittel, vorzugsweise Polyurethanharze und Aminoplastharze, sowie eine wasserenthaltende, pigmentfreie Komponente enthält.

Der vorliegenden Erfindung liegt somit die Aufgabe zugrunde, ein Mischsystem zur Verfügung zu stellen, das die Herstellung wasserverdünnbarer Überzugsmittel mit genau festgelegter Tönung aus verschiedenen Basisfarben ermöglicht. Die aus dem Mischsystem hergestellten Überzugsmittel sollten insbesondere eine hohe Deckfähigkeit aufweisen. Insbesondere sollte dieses Mischsystem die Herstellung wäßriger Überzugsmittel ermöglichen, die für die Reparaturlackierung, insbesondere von Schadstellen an Automobilkarossen, geeignet sind. Dabei sollte eine hohe Farbtongenauigkeit der Basisfarben gewährleistet sein, um so die gewünschten Farbtöne ohne aufwendige Maßnahmen beim Lackierer möglichst exakt und reproduzierbar einstellen zu können.
Dies bedeutet auch, daß die für den Aufbau dieses Mischsystems verwendeten Basisfarben eine sehr gute Lagerstabilität (> 12 Monate) aufweisen müssen. Schließlich sollten die unter Verwendung dieses Mischsystems hergestellten wäßrigen Überzugsmittel sowohl im Falle von Effektlacken als auch im Falle von Unifarbtönen zu Beschichtungen mit guten mechanischen Eigenschaften führen.

Dabei sollte dieses Mischsystem die Formulierung von Überzugsmitteln gewährleisten, die dieses hohe Qualitätsniveau bei einem im Vergleich zu den üblicherweise hergestellten Überzugsmitteln verringerten Anteil an organischen Lösemitteln gewährleisten.

Diese Aufgabe wird überraschenderweise durch ein Mischsystem aus den Komponenten A und B für die Herstellung von wasserverdünnbaren Überzugsmitteln mit genau festgelegter Tönung aus verschiedenen Basisfarben gelöst, das dadurch gekennzeichnet ist, daß das Mischsystem
A) verschiedene Basisfarben A, die weniger als 5 Gew.-% Wasser, mindestens ein farb- und/oder effektgebendes Pigment, organisches Lösemittel, ggf. Hilfs- und Zusatzstoffe sowie mindestens ein wasserverdünnbares oder wasserdispergierbares acryliertes Polyurethanharz (A1) und/oder mindestens ein wasserverdünnbares oder wasserdispergierbares Polyacrylatharz (A2) und
B) mindestens eine wasserenthaltende, pigmenfreie Komponente B
enthält,
wobei das acrylierte Polyurethanharz (Al) erhältlich ist, indem in einem organischen Lösemittel oder in einem Gemisch organischer Lösemittel
Ai) ethylenisch ungesättigte Monomere oder ein Gemisch ethylenisch ungesättigter Monomere in Gegenwart
Aii) eines Polyurethanharzes, das ein zahlenmittleres Molekulargewicht von 200 bis 30.000, vorzugsweise 1000 bis 5000 und das in statistischem Mittel pro Molekül 0,05 bis 1,1, vorzugsweise 0,2 bis 0,9, besonders bevorzugt 0,3 bis 0,7 polymerisierbare Doppelbindungen enthält,
polymerisiert werden und wobei das Polyacrylatharz (A2) erhältlich ist, indem
(I) ein Gemisch aus
   (a1) einem mit (a2), (a3), (b1) und (b2) copolymerisierbaren, im wesentlichen carboxylgruppenfreien (Meth)crylsäureester oder einem Gemisch aus solchen (Meth)acrylsäureestern und gegebenenfalls
   (a2) einem mit (a1), (a3), (b1) und (b2) copolymerisierbaren ethylenisch ungesättigten Monomeren, das mindestens eine Hydroxylgruppe pro Molekül trägt und im wesentlichen carboxylgruppenfrei ist oder einem Gemisch aus solchen Monomeren und gegebenenfalls
   (a3) einem mit (a1), (a2), (b1) und (b2) copolymerisierbaren, im wesentlichen carboxylgruppenfreien ethylenisch ungesättigten Monomeren oder einem Gemisch aus solchen Monomeren
   zu einem organischen Lösemittel oder Lösemittelgemisch gegeben und in Gegenwart mindestens eines Polymerisationsinitiators polymerisiert wird und
(II) nachdem mindestens 80 Gew.-% des aus (a1), gegebenenfalls (a2) und gegebenenfalls (a3) bestehenden Gemisches zugegeben worden sind
   (b1) 60 - 100 Gew.-% eines mindestens eine Carboxylgruppe pro Molekül tragenden, mit (a1), (a2) und (a3) copolymerisierbaren ethylenisch ungesättigten Monomeren oder eines Gemisches aus solchen Monomeren zusammen mit
   (b2) 0 bis 40 Gew.-% eines carboxylgruppenfreien, mit (a1), (a2), (a3) und (b1) copolymerisierbaren ethylenisch ungesättigten Monomers oder eines Gemisches aus solchen Monomeren
   zugegeben werden und weiterpolymerisiert wird, wobei die Summe der Gewichtsanteile von (b1) und (b2) stets 100 Gew.-% ergibt und (a1), (a2), (a3), (b1) und (b2) in Art und Menge so ausgewählt werden, daß das Polyacrylatharz eine Hydroxylzahl von 0 bis < 40, vorzugsweise 5 bis 35, eine Säurezahl von 20 bis 100, vorzugsweise 25 bis 50 und eine Glasübergangstempertur (T_{G}) von -40°C bis +60°C, vorzugsweise -20°C bis +40°C, ausweist.

Gegenstand der vorliegenden Erfindung ist auch ein Verfahren zur Herstellung von wasserverdünnbaren Überzugsmitteln mit genau festgelegter Tönung, bei dem verschiedene Basisfarben eines Mischsystems getrennt hergestellt und gelagert werden und erst kurz vor der Applikation des überzugsmittels gemischt werden, dadurch gekennzeichnet, daß das erfindungsgemäße Mischsystem eingesetzt wird.

Schließlich betrifft die vorliegende Erfindung auch die Verwendung der Mischsysteme zur Herstellung von wäßrigen Überzugsmitteln für die Reparaturlackierung, insbesondere zur Herstellung von Wasserbasislacken für die Reparaturlackierung, insbesondere von Automobilkarossen.
Es ist überraschend und war nicht vorhersehbar, daß durch das erfindungsgemäße Mischsystem die Herstellung von wäßrigen Überzugsmassen ermöglicht wird, die sich durch eine exakte und reproduzierbare Einstellung des gewünschten Farbtons auszeichnen, ohne daß hierzu aufwendige Maßnahmen erforderlich sind. Gewährleistet wird dies durch eine hohe Farbtongenauigkeit und eine entsprechend gute Lagerstabilität der Basisfarben. Ein weiterer Vorteil ist darin zu sehen, daß die erfindungsgemäß hergestellten Basisfarben gegen Einfrieren/Auftauen unempfindlich sind. Weiterhin weisen die so hergestellten wäßrigen Überzugsmassen den Vorteil auf, daß sie zu Beschichtungen mit guten mechanischen Eigenschaften führen.

Vorteilhaft ist ferner, daß durch das erfindungsgemäße Mischsystem auch im Bereich der Reparaturlackierung Überzugsmittel zur Verfügung gestellt werden, die den hohen Anforderungen hinsichtlich der Qualität der Reparaturlackierung gerecht werden und dazu als Lösemittel überwiegend Wasser enthalten und in denen organische Lösemittel nur noch in geringen Mengen enthalten sind. Neben wirtschaftlichen Vorteilen führt dieser reduzierte Lösemittelanteil zur Verbesserung der Arbeitssicherheit (Brandschutz) und zur Verringerung der Umweltbelastung beim Trocknen der Lackfilme. Dies ist insbesondere im Bereich der Reparaturlackierung von Automobilkarossen von Bedeutung, da die in diesem Bereich eingesetzten Effektlacke üblicherweise einen sehr hohen Lösemittelanteil von bis zu 90 % enthalten, um einen guten Metalleffekt zu gewährleisten.

Der erfindungsmäße Einsatz im wesentlichen wasserfreier, bevorzugt völlig wasserfreier Basisfarben, bietet außerdem den Vorteil, daß für die Lagerung dieser Basisfarben Behälter verwendet werden können, die nicht (z. B. durch eine entsprechende Innenlackierung) gegen eine Korrosion durch Wasser geschützt sein müssen. Weiterhin können für die Formulierung der Basisfarben unter bestimmten Voraussetzungen auch wasserempfindliche Pigmente eingesetzt werden, wodurch die zur Verfügung stehende Auswahl an Pigmenten erheblich vergrößert wird.
Im folgenden sollen nun die einzelnen Komponenten des erfindungsgemäßen Mischsystems näher erläutert werden.

Die Komponente A des Mischsystems kann alle lacküblichen Pigmente enthalten, vorausgesetzt, daß sie nicht innerhalb kurzer Zeit (Zeitspanne zwischen dem Zusammenrühren der Komponenten A und B und der Applikation der Lacke) mit Wasser reagieren und daß sie sich nicht in Wasser lösen. Die Komponente A kann dabei Effektpigmente und/oder farbgebende Pigmente auf anorganischer oder organischer Basis enthalten. Um eine möglichst universelle Einsatzbreite zu gewährleisten und möglichst viele Farbtöne realisieren zu können, ist es bevorzugt, ein Mischsystem auf der Basis von nur farbgebende Pigmente enthaltenden Komponenten A und nur Effektpigmente enthaltenden Komponenten A aufzubauen.

Zur Herstellung der Komponente A können alle üblicherweise bei der Formulierung von wäßrigen Überzugsmitteln eingesetzten Effektpigmente eingesetzt werden. Beispiele für geeignete Effektpigmente sind handelsübliche Aluminiumbronzen, die gemäß DE-OS-3636183 chromatierten Aluminiumbronzen, handelsübliche Edelstahlbronzen sowie andere übliche Metallplättchen und Metallflockenpigmente. Für die Herstellung der Komponente A sind auch nicht metallische Effektpigmente, wie zum Beispiel Perlglanz- bzw. Interferenzpigmente geeignet.
Beispiele für geeignete farbgebende Pigmente auf anorganischer Basis sind Titandioxid, Eisenoxide, Ruß u.ä. Beispiele für geeignete farbgebende Pigmente auf organischer Basis sind Indanthrenblau, Cromophthalrot, Irgazinorange, Sicotransgelb, Heliogengrün u.ä.

Als Bindemittel für den Einsatz in der Komponente A sind die bereits genannten wasserverdünnbaren bzw. wasserdispergierbaren acrylierten Polyurethane und Polyacrylate geeignet, die üblicherweise in wäßrigen Überzugsmitteln eingesetzt werden und die sich in Form organischer Lösungen darstellen lassen. Die Wasserverdünnbarkeit bzw. Wasserdispergierbarkeit der Harze kann dabei auch durch Verwendung entsprechender Lösevermittler als Cosolvens bzw. Solvens eingestellt werden. Entscheidend für die Auswahl der Bindemittel ist einerseits die gute Lagerstabilität in organischer Lösung, insbesondere auch die Fähigkeit, ein Absetzen der Pigmente zu vermeiden, sowie andererseits die problemlose Einarbeitbarkeit der Basisfarbe in die Komponente B bzw. die problemlose Einarbeitbarkeit der Komponente B in die Basisfarbe. Die Einarbeitbarkeit der Basisfarbe in Komponente B bzw. die umgekehrte Einarbeitbarkeit können zwar auch durch die Verwendung von Dispergieradditiven, wie zum Beispiel ionische oder nichtionische Tenside, gesteuert werden. Derartige Additive sollten aber in möglichst geringen Mengen eingesetzt werden, um die Wasserfestigkeit der resultierenden Beschichtungen nicht zu beeinträchtigen.

Die als Bindemittel in den Basisfarben eingesetzten acrylierten Polyurethanharze (A1) sind prinzipiell bekannt.

Derartige, als Bindemittel in der Komponente A des erfindungsgemäßen Mischsystems verwendete acrylierte Polyurethane (A1) sowie deren Herstellung sind in der DE-OS 40 10 176 beschrieben.

Zur Herstellung dieser acrylierten Polyurethane (A1) wird in einem ersten Schritt nach gut bekannten Methoden der Polyurethanchemie ein Polyurethanharz (Aii) hergestellt. Das Polyurethanharz wird aus folgenden Komponenten hergestellt:
- (Aiia): ein Polyester- und/oder Polyetherpolyol mit einem zahlenmittleren Molekulargewicht von 400 bis 5000 oder ein Gemisch aus solchen Polyester- und/oder Polyetherpolyolen
- (Aiib): ein Polyisocyanat oder Gemisch aus Polyisocyanaten
- (Aiic): gegebenenfalls eine Verbindung, die neben einer polymerisierbaren Doppelbindung mindestens noch eine gegenüber NCO-Gruppen reaktive Gruppe enthält oder ein Gemisch aus solchen Verbindungen
- (Aiid): gegebenenfalls eine Verbindung, die mindestens eine gegenüber Isocyanatgruppen reaktive und mindestens eine zur Anionenbildung befähigte Gruppe im Molekül aufweist oder ein Gemisch aus solchen Verbindungen
- (Aiie): gegebenenfalls eine Verbindung, die mindestens eine gegenüber NCO-Gruppen reaktive Gruppe und mindestens eine Poly(oxyalkylen)gruppe im Molekül aufweist, oder ein Gemisch aus solchen Verbindungen und gegebenenfalls
- (Aiif): eine Hydroxyl- und/oder Aminogruppen enthaltende organische Verbindung mit einem Molekulargewicht von 60 bis 600, oder ein Gemisch aus solchen Verbindungen.

Das Polyurethanharz (Aii) soll ein zahlenmittleres Molekulargewicht von 200 bis 30.000, vorzugsweise 1000 bis 5000 und im statistischen Mittel pro Molekül 0,05 bis 1,1, vorzugsweise 0,2 bis 0,9, besonders bevorzugt 0,3 bis 0,7 polymerisierbare Doppelbindungen enthalten. Es ist bevorzugt, daß das Polyurethanharz (Aii) eine Säurezahl von 0 bis 90 mg KOH/g aufweist.

Das Molekulargewicht der Polyurethanharze kann - wie dem Fachmann bekannt - insbesondere durch das Mengenverhältnis und die Funktionalität der eingesetzten Ausgangsverbindungen (Aiia) bis (Aiif) gesteuert werden.

Die Polyurethanharze können sowohl in Substanz als auch in organischen Lösemitteln hergestellt werden.

Die Polyurethanharze können durch gleichzeitige Umsetzung aller Ausgangsverbindungen hergestellt werden. In vielen Fällen ist es jedoch zweckmäßig, die Polyurethanharze stufenweise herzustellen. So ist es zum Beispiel möglich, aus den Komponenten (Aiia) und (Aiib) ein isocyanatgruppenhaltiges Präpolymer herzustellen, das dann mit der Komponente (Aiic) weiter umgesetzt wird. Weiter ist es möglich, aus den Komponenten (Aiia), (Aiib), (Aiic) und gegebenenfalls (Aiid) und (Aiie) ein isocyanatgruppenhaltiges Präpolymer herzustellen, das dann mit der Komponente (Aiif) zu höhermolekularen Polyurethanen umgesetzt werden kann. In den Fällen, in denen als Komponente (Aiic) eine Verbindung eingesetzt wird, die nur eine gegenüber Isocyanatgruppen reaktive Gruppe enthält, kann in einer ersten Stufe aus (Aiib) und (Aiic) ein isocyanatgruppenhaltiges Vorprodukt hergestellt werden, das anschließend mit den weiteren Komponenten weiter umgesetzt werden kann.

Die Umsetzung der Komponenten (Aiia) bis (Aiif) wird zweckmäßigerweise in Gegenwart von Katalysatoren wie z.B. Dibutylzinndilaurat, Dibutylzinnmaleat, tertiäre Amine usw. durchgeführt.

Die einzusetzenden Mengen an Komponente (Aiia), (Aiib), (Aiic), (Aiid), (Aiie) und (Aiif) ergeben sich aus dem anzustrebenden zahlenmittleren Molekulargewicht und der anzustrebenden Säurezahl. Die polymerisierbaren Doppelbindungen können durch Einsatz von polymerisierbare Doppelbindungen aufweisende (Aiia) Komponenten und/oder die Komponente (Aiia) in die Polyurethanmoleküle eingeführt werden. Es ist bevorzugt, die polymerisierbaren Doppelbindungen über die Komponente (Aiic) einzuführen.

Als Komponente (Aiia) können gesättigte und ungesättigte Polyester- und/oder Polyetherpolyole, insbesondere Polyester- und Polyetherdiole mit einem zahlenmittleren Molekulargewicht von 400 bis 5000 eingesetzt werden. Geeignete Polyetherdiole sind z.B. Polyetherdiole der allgemeinen Formel H(-O-(CHR¹)ₙ-)ₘOH, wobei R¹ = Wasserstoff oder ein niedriger, gegebenenfalls substituierter Alkylrest ist, n = 2 bis 6, bevorzugt 3 bis 4 und m = 2 bis 100, bevorzugt 5 bis 50 ist. Als Beispiele werden lineare oder verzweigte Polyetherdiole wie Poly(oxyethylen)glykole, Poly(oxypropylen)glykole und Poly(oxybutylen)glykole genannt.
Die ausgewählten Polyetherdiole sollen keine übermäßigen Mengen an Ethergruppen einbringen, weil sonst die gebildeten Polymere in Wasser anquellen. Die bevorzugten Polyetherdiole sind Poly(oxypropylen)glykole im Molmassenbereich Mₙ von 400 bis 3000.

Polyesterdiole werden durch Veresterung von organischen Dicarbonsäuren oder ihre Anhydriden mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäuren mit einer höheren Wertigkeit eingesetzt werden. Die Dicarbonsäuren und Diole können lineare oder verzweigte aliphatische, cycloaliphatische oder aromatische Dicarbonsäuren oder Diole sein.

Die zur Herstellung der Polyester verwendeten Diole bestehen beispielsweise aus Alkylenglykolen, wie Ethylenglykol, Propylenglykol, Butylenglykol, Butandiol-1,4, Hexandiol-1,6, Neopentylglykol und anderen Diolen, wie Dimethylolcyclohexan. Es können jedoch auch kleine Mengen an Polyolen, wie Trimethylolpropan, Glycerin, Pentaerythrit, zugesetzt werden. Die Säurekomponente des Polyesters besteht in erster Linie aus niedermolekularen Dicarbonsäuren oder ihren Anhydriden mit 2 bis 44, bevorzugt 4 bis 36 Kohlenstoffatomen im Molekül. Geeignete Säuren sind beispielsweise o-Phthalsäure, Isophthalsäure, Terephthalsäure, Tetrahydrophthalsäure, Cyclohexandicarbonsäure, Bernsteinsäure, Adipinsäure, Azelainsäure, Sebazinsäure, Maleinsäure, Fumarsäure, Glutarsäure, Hexachlorheptandicarbonsäure, Tetrachlorphthalsäure und/oder dimerisierte Fettsäuren. Anstelle dieser Säuren können auch ihre Anhydride, soweit diese existieren, verwendet werden. Bei der Bildung von Polyesterpolyolen können auch kleinere Mengen an Carbonsäuren mit 3 oder mehr Carboxylgruppen beispielsweise Trimellithsäureanhydrid oder das Addukt von Maleinsäureanhydrid an ungesättigte Fettsäuren anwesend sein.

Es können auch Polyesterdiole eingesetzt werden, die durch Umsetzung eines Lactons mit einem Diol erhalten werden. Sie zeichnen sich durch die Gegenwart von endständigen Hydroxylgruppen und wiederkehrenden Polyesteranteilen der Formel (-CO-(CHR²)ₙ-CH₂-O) aus. Hierbei ist n bevorzugt 4 bis 6 und der Substituent R²=Wasserstoff, ein Alkyl-, Cycloalkyl- oder Alkoxy-Rest. Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure.

Für die Herstellung der Polyesterdiole wird das unsubstituierte ε-Caprolacton, bei dem n den Wert 4 hat und alle R²-Substituenten Wasserstoff sind, bevorzugt. Die Umsetzung mit Lacton wird durch niedermolekulare Polyole wie Ethylenglykol, 1,3-Propandiol, 1,4-Butandiol, Dimethylolcyclohexan gestartet. Es können jedoch auch andere Reaktionskomponenten, wie Ethylendiamin, Alkyldialkanolamine oder auch Harnstoff mit Caprolacton umgesetzt werden. Als höhermolekulare Diole eignen sich auch Polylactamdiole, die durch Reaktion von beispielsweise ε-Caprolactam mit niedermolekularen Diolen hergestellt werden.

Wenn über die Komponente (Aiia) polymerisierbare Doppelbindungen in die Polyurethanmoleküle eingeführt werden sollen, dann müssen (Aiia) Komponenten eingesetzt werden, die polymerisierbare Doppelbindungen enthalten. Als Beispiele für solche (Aiia) Komponenten werden Polyesterpolyole, vorzugsweise Polyesterdiole genannt, die unter Verwendung von polymerisierbare Doppelbindungen enthaltenden Polyolen und/oder Polycarbonsäuren hergestellt worden sind. Als Beispiele für polymerisierbare Doppelbindungen enthaltende Polyole werden genannt: Trimethylolpropanmonoallylether, Glycerinmonoallylether, Pentaerythritmono- und Pentaerythritdiallylether. Als Beispiele für polymerisierbare Doppelbindungen enthaltende Polycarbonsäuren werden Alkendicarbonsäuren, Maleinsäure und ungesättigte dimerisierte Fettsäuren genannt.

Als Komponente (Aiib) können aliphatische und/oder cycloaliphatische und/oder aromatische Polyisocyanate eingesetzt werden. Als Beispiele für aromatische Polyisocyanate werden Phenylendiisocyanat, Toluylendiisocyanat, Xylylendiisocyanat, Biphenylendiisocyanat, Naphtylendiisocyanat und Diphenylmethandiisocyanat genannt.
Aufgrund ihrer guten Beständigkeit gegenüber ultraviolettem Licht ergeben (cyclo)aliphatische Polyisocyanate Produkte mit geringer Vergilbungsneigung. Beispiele für cycloaliphatische Polyisocyanate sind Isophorondiisocyanat, Cyclopentylendiisocyanat sowie die Hydrierungsprodukte der aromatischen Diisocyanate wie Cyclohexylendiisocyanat, Methylcyclohexylendiisocyanat und Dicyclohexylmethandiisocyanat. Aliphatische Diisocyanate sind Verbindungen der Formel

OCN-(CR³₂)r-NCO

worin r eine ganze Zahl von 2 bis 20, insbesondere 6 bis 8 ist und R³, das gleich oder verschieden sein kann, Wasserstoff oder einen niedrigen Alkylrest mit 1 bis 8 C-Atomen, vorzugsweise 1 oder 2 C-Atomen darstellt. Beispiele hierfür sind Trimethylendiisocyanat, Tetramethylendiisocyanat, Pentamethylendiisocyanat, Hexamethylendiisocyanat, Propylendiisocyanat, Ethylethylendiisocyanat, Dimethylethyldiisocyanat, Methyltrimethylendiisocyanat und Trimethylhexandiisocyanat. Als weiteres Beispiel für ein aliphatisches Diisocyanat wird Tetramethylxyloldiisocyanat genannt. Besonders bevorzugt werden als Diisocyanate Isophorondiisocyanat und Dicyclohexylmethandiisocyanat.

Die Komponente (Aiib) muß hinsichtlich der Funktionalität der Polyisocyanate so zusammengesetzt sein, daß kein vernetztes Polyurethanharz erhalten wird. Die Komponente (Aiib) kann neben Diisocyanaten auch einen Anteil an Polyisocyanaten mit Funktionalitäten über zwei - wie z.B. Triisocyanate - enthalten.

Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Hierzu gehören beispielsweise das Biuret von Hexamethylendiisocyanat und Wasser, das Isocyanurat des Hexamethylendiisocyanats oder das Addukt von Isophorondiisocyanat an Trimethylolpropan. Die mittlere Funktionalität kann gegebenenfalls durch Zusatz von Monoisocyanaten gesenkt werden. Beispiele für solche kettenabbrechenden Monoisocyanate sind Phenylisocyanat, Cyclohexylisocyanat und Stearylisocyanat.

Die Komponente (Aiic) dient zur Einführung von polymerisierbaren Doppelbindungen in die Polyurethanharzmoleküle. Es ist bevorzugt, als Komponente (Aiic) eine Verbindung einzusetzen, die mindestens zwei gegenüber NCO-Gruppen reaktive Gruppen und eine polymerisierbare Doppelbindung enthält. Besonders bevorzugt werden als Komponente (Aiic) Verbindungen eingesetzt, die neben einer polymerisierbaren Doppelbindung noch zwei gegenüber NCO-Gruppen reaktive Gruppen enthalten. Als Beispiele für gegenüber NCO-Gruppen reaktive Gruppen werden -OH, -SH, > NH und -NH₂-Gruppen genannt, wobei -OH, > NH und -NH₂-Gruppen bevorzugt sind.
Als Beispiele für Verbindungen, die als Komponente (Aiic) eingesetzt werden können, werden genannt: Hydroxy(meth)acrylate, insbesondere Hydroxyalkyl(meth)acrylate wie Hydroxyethyl-, Hydroxypropyl-, Hydroxybutyl- oder Hydroxyhexyl(meth)acrylat und 2,3-Dihydroxypropyl(meth)acrylat, 2,3-Dihydroxypropylmonoallylether, 2,3-Dihydroxypropansäureallylester, Glycerinmono(meth)acrylat, Glycerinmonoallylether, Pentaerythritmono(meth)acrylat, Pentaerythritdi(meth)acrylat, Pentaerythritmonoallylether, Pentaerythritdiallylether, Trimethylolpropanmonoallylether, Trimethylpropanmono(meth)acrylat und Trimethylolpropandiallylether. Als Komponente (Aiic) werden vorzugsweise Trimethylolpropanmonoallylether, Glycerinmono(meth)-acrylat, Pentaerythritdi(meth)acrylat, Pentaerythritdiallylether, Glycerinmonoallylether und Trimethylolpropanmono(meth)acrylat eingesetzt. Als Komponente (Aiic) werden besonders bevorzugt Trimethylolpropanmonoallylether und Glycerinmonoallylether eingesetzt. Es ist bevorzugt, die (Aiic) Komponenten, die mindestens zwei gegenüber NCO-Gruppen reaktive Gruppen enthalten, kettenständig (nicht endständig) in die Polyurethanmoleküle einzubauen.

Die Einführung von zur Anionenbildung befähigten Gruppen in die Polyurethanmoleküle erfolgt über den Einbau von Verbindungen (Aiid) in die Polyurethanmoleküle, die mindestens eine gegenüber Isocyanatgruppen reaktive und eine zur Anionenbildung befähigte Gruppe im Molekül enthalten.

Die Menge an einzuzusetzender Komponente (Aiid) kann aus der angestrebten Säurezahl berechnet werden.

Als Komponente (Aiid) werden vorzugsweise Verbindungen eingesetzt, die zwei gegenüber Isocyanat-gruppen reaktive Gruppen im Molekül enthalten. Geeignete gegenüber Isocyanatgruppen reaktive Gruppen sind insbesondere Hydroxylgruppen, sowie primäre und/oder sekundäre Aminogruppen. Geeignete zur Anionenbildung befähigte Gruppen sind Carboxyl-, Sulfonsäure- und/oder Phosphonsäuregruppen, wobei Carboxylgruppen bevorzugt sind. Als Komponente (Aiid) können beispielsweise Alkansäuren mit zwei Substituenten am α-ständigem Kohlenstoffatom eingesetzt werden. Der Substituent kann eine Hydroxylgruppe, eine Alkylgruppe oder bevorzugt eine Alkylolgruppe sein. Diese Alkansäuren haben mindestens eine, im allgemeinen 1 bis 3 Carboxylgruppen im Molekül. Sie haben zwei bis etwa 25, vorzugsweise 3 bis 10 Kohlenstoffatome. Beispiele für die Komponente (Aiid) sind Dihydroxypropionsäure, Dihydroxybernsteinsäure und Dihydroxybenzoesäure. Eine besonders bevorzugte Gruppe von Alkansäuren sind die α,α-Dimethylolalkansäuren der allgemeinen Formel R⁴-C(CH₂OH)₂COOH, wobei R⁴ für ein Wasserstoffatom oder eine Alkylgruppe mit bis zu etwa 20 Kohlenstoffatomen steht.

Beispiele für solche Verbindungen sind 2,2-Dimethylolessigsäure, 2,2-Dimethylolpropionsäure, 2,2-Dimethylolbuttersäure und 2,2-Dimethylolpentansäure. Die bevorzugte Dihydroxyalkansäure ist 2,2-Dimethylolpropionsäure. Aminogruppenhaltige Verbindungen sind beispielsweise α,δ-Diaminovaleriansäure, 3,4-Diaminobenzoesäure, 2,4-Diaminotoluolsulfonsäure und 2,4-Diamino-diphenylethersulfonsäure.

Mit Hilfe der Komponente (Aiie) können Poly(oxyalkylen)-gruppen als nichtionische stabilisierende Gruppen in die Polyurethanmoleküle eingeführt werden. Als Komponente (Aiie) können beispielsweise eingesetzt werden Alkoxypoly(oxyalkylen)alkohole mit der allgemeinen Formel R'O-(-CH₂-CHR"-O-)ₙ H in der R' für einen Alkylrest mit 1 bis 6 Kohlenstoffatomen, R" für ein Wasserstoffatom oder einen Alkylrest mit 1 bis 6 Kohlenstoffatomen und n für eine Zahl zwischen 20 und 75 steht.

Der Einsatz der Komponente (Aiif) führt zur Molekulargewichtserhöhung der Polyurethanharze. Als Komponente (Aiif) können beispielsweise Polyole mit bis zu 36 Kohlenstoffatomen je Molekül wie Ethylenglykol. Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Di-trimethylolpropanether, Pentaerythrit, 1,2-Cyclohexandiol, 1,4-Cyclohexandimethanol, Bisphenol A, Bisphenol F, Neopentylglykol, Hydroxypivalinsäure-neopentylglykolester, hydroxyethyliertes oder hydroxypropyliertes Bisphenol A, hydriertes Bisphenol A und deren Mischungen eingesetzt werden. Die Polyole werden im allgemeinen in Mengen von bis zu 30 Gewichtsprozent, vorzugsweise 2 bis 20 Gewichtsprozent, bezogen auf die eingesetzte Menge an Komponente (Aiia) und (Aiif) eingesetzt.

Als Komponente (Aiif) können auch Di- und/oder Polyamine mit primären und/oder sekundären Aminogruppen eingesetzt werden. Polyamine sind im wesentlichen Alkylen-Polyamine mit 1 bis 40 Kohlenstoffatomen, vorzugsweise etwa 2 bis 15 Kohlenstoffatomen. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen. Als Diamine sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Menthandiamin, Isophorondiamin, 4,4'-Diaminodicyclohexylmethan und Aminoethylethanolamin. Bevorzugte Diamine sind Hydrazin, Alkyl- oder Cycloalkyldiamine wie Propylendiamin und l-Amino-3-aminomethyl-3,5,5-trimethylcyclohexan. Es können auch Polyamine als Komponente (Aiif) eingesetzt werden, die mehr als zwei Aminogruppen im Molekül enthalten. In diesen Fällen ist jedoch - z.B. durch Mitverwendung von Monoaminen - darauf zu achten, daß keine vernetzten Polyurethanharze erhalten werden. Solche brauchbaren Polyamine sind Diethylentriamin, Triethylentetramin, Dipropylendiamin und Dibutylentriamin. Als Beispiel für ein Monoamin wird Ethylhexylamin genannt.

Die acrylierten Polyurethanharze werden hergestellt, indem eine Lösung des Polyurethanharzes (Aii) in einem organischen Lösemittel bzw. einem organischen Lösemittelgemisch bereitgestellt wird und in dieser Lösung ethylenisch ungesättigte Monomere oder ein Gemisch ethylenisch ungesättigter Monomere in einer radikalischen Polymerisation polymerisiert werden und das so erhaltene Reaktionsprodukt in eine wäßrige Dispersion überführt wird. Es ist bevorzugt, wassermischbare organische Lösemittel einzusetzen. Als Beispiele für brauchbare Lösemittel werden Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethylether, Diethylenglykoldiethylether, Diethylenglykolmonobutylether und 3-Methyl-3-methoxybutanol oder Mischungen aus diesen Lösemitteln genannt.

Bevorzugt werden Ketone, wie z.B. Aceton, Methylethylketon, Diethylketon und Methylisobutylketon.

Die radikalische Polymerisation wird bei Temperaturen von 80 bis 160°C, vorzugsweise 120 bis 160°C in den oben genannten organischen Lösemitteln bzw. Lösemittelgemischen durchgeführt.

Als Beispiele für brauchbare Polymerisationsinitiatoren werden freie Radikale bildende Initiatoren, wie z.B. Benzoylperoxid, Azobisisobutyronitril und t-Butylperbenzoat genannt.

Bei der Polymerisation kommt es auch zu Pfropfungsreaktionen zwischen dem Polyurethanharz (Aii) und der Komponente (Ai). Die Komponenten (Ai) und (Aii) werden in einem Gewichtsverhältnis von 1 : 10 bis 10 : 1, vorzugsweise 1 : 2 bis 2 : 1, besonders bevorzugt 1 : 1 eingesetzt.

Als ethylenisch ungesättigte Monomere können praktisch alle radikalisch polymerisierbaren Monomere eingesetzt werden, wobei jedoch die üblichen Einschränkungen für Copolymerisationen gelten, die durch das Q- und e-Schema nach Alfrey und Price bzw. durch die Copolymerisationsparameter vorgegeben sind (vgl. z.B. Brandrup und Immergut, Polymer Handbook, 2nd ed. John Wiley + Sons, New York (1975)).

Als ethylenisch ungesättigte Monomeren können eingesetzt werden:
(i) aliphatische oder cycloaliphatische Ester der Acrylsäure oder Methacrylsäure oder ein Gemisch aus solchen Estern und
(ii) mindestens eine Hydroxylgruppe im Molekül tragende ethylenisch ungesättigte Monomere oder ein Gemisch aus solchen Monomeren und
(iii) mindestens eine Carboxylgruppe im Molekül tragende ethylenisch ungesättigte Monomere oder ein Gemisch aus solchen Monomeren und
(iv) weitere von (i), (ii) und (iii) verschiedene ethylenisch ungesättigte Monomere oder ein Gemisch aus solchen Monomeren sowie
(v) polyungesättigte Monomere, insbesondere ethylenisch polyungesättigte Monomere.
Die oben genannten Monomere werden vorzugsweise als Mischungen eingesetzt, wobei die Komponente
(i) in einer Menge von 40 bis 100, vorzugsweise 60 bis 90 Gew.-%, die Komponente (ii) in einer Menge von 0 bis 20, vorzugsweise 3 bis 12 Gew.-%, die Komponente (iii) in einer Menge von 0 bis 30, vorzugsweise 5 bis 15 Gew.-%, die Komponente (iv) in einer Menge von 0 bis 30, vorzugsweise 0 bis 10 Gew.-% und die Komponente (v) in einer Menge von 0 bis 5, vorzugsweise 0 Gew.-% eingesetzt wird, wobei die Summe der Gewichtsanteile von (i), (ii), (iii), (iv) und (v) stets 100 Gew.-% ergibt.

Als Komponente (i) können z.B. eingesetzt werden: Cyclohexylacrylat, Cyclohexylmethacrylat, Alkylacrylate und Alkylmethacrylate mit bis zu 20 Kohlenstoffatomen im Alkylrest, wie z.B. Methyl-, Ethyl-, Propyl-, Butyl-, Hexyl-, Ethylhexyl-, Stearyl- und Laurylacrylat und -methacrylat oder Gemische aus diesen Monomeren.

Als Komponente (ii) können z.B. eingesetzt werden: Hydroxyalkylester der Acrylsäure, Methacrylsäure oder einer anderen α,β-ethylenisch ungesättigten Carbonsäure. Diese Ester können sich von einem Alkylenglykol ableiten, das mit der Säure verestert ist, oder sie können durch Umsetzung der Säure mit einem Alkylenoxid erhalten werden. Als Komponente (ii) werden vorzugsweise Hydroxyalkylester der Acrylsäure und Methacrylsäure, in denen die Hydroxyalkylgruppe bis zu 4 Kohlenstoffatome enthält, oder Mischungen aus diesen Hydroxyalkylestern eingesetzt. Als Beispiele für derartige Hydroxyalkylester werden 2-Hydroxyethylacrylat, 2-Hydroxypropylacrylat, 2-Hydroxypropylmethacrylat, 3-Hydroxypropylacrylat, 3-Hydroxypropylmethacrylat, 2-Hydroxyethylmethacrylat, 3-Hydroxybutylacrylat oder 4-Hydroxybutyl(meth)acrylat genannt. Entsprechende Ester von anderen ungesättigten Säuren, wie z.B. Ethacrylsäure, Crotonsäure und ähnliche Säuren mit bis zu etwa 6 Kohlenstoffatomen pro Molekül können auch eingesetzt werden.

Als Komponente (iii) werden vorzugsweise Acrylsäure und/oder Methacrylsäure eingesetzt. Es können aber auch andere ethylenisch ungesättigte Säuren mit bis zu 6 Kohlenstoffatomen im Molekül eingesetzt werden. Als Beispiele für solche Säuren werden Ethacrylsäure, Crotonsäure, Maleinsäure, Fumarsäure und Itaconsäure genannt.

Als Komponente (iv) können z.B. eingesetzt werden: vinylaromatische Kohlenwasserstoffe, wie Styrol, α-Alkylstyrol und Vinyltoluol, Acryl- und Methacrylamid und Acryl- und Methacrylnitril oder Gemische aus diesen Monomeren.

Als Komponenten (v) können Verbindungen eingesetzt werden, die mindestens zwei radikalisch polymerisierbare Doppelbindungen im Molekül enthalten. Als Beispiele werden genannt: Divinylbenzol, p-Methyldivinylbenzol, o-Nonyldivinylbenzol, Ethandioldi(meth)acrylat, 1,4 Butandioldi(meth)acrylat, 1,6-Hexandioldi(meth)acrylat, Trimethylolpropantri(meth)acrylat, Pentaerythritdi(meth)acrylat, Allylmethacrylat, Diallylphthalat, Butandioldivinylether, Divinylethylenharnstoff, Divinylpropylenharnstoff, Maleinsäurediallylester usw.

Bevorzugt wird der Einsatz von difunktionellen ungesättigten Monomeren wie Butandioldiacrylat oder Hexandioldiacrylat. Bei Verwendung von Glycidylmethacrylat und Methacrylsäure entsteht das entsprechende Glycerindimethacrylat automatisch bei der Polymerisation. Die Art und Menge an polyungesättigten Monome-ren ist mit den Reaktionsbedingungen (Katalysatoren, Reaktionstemperatur, Löesemittel) sorgfältig abzustimmen, um keine Gelierung zu erhalten. Die zugesetzte Menge an polyungesättigten Monomeren dient dazu, ohne Gelbildungen die mittlere Molmasse anzuheben. Bevorzugt ist es jedoch, kein polyungesättigtes Monomeres zuzusetzen.

Die erfindungsgemäß eingesetzten, aus (Ai) und (Aii) hergestellten Polymere müssen zur Anionenbildung befähigte Gruppen enthalten, die vor oder während der Überführung der Polymere aus dem organischen Lösemittel bzw. Lösemittelgemisch in Wasser neutralisiert werden und die Bildung stabiler wäßriger Dispersionen ermöglichen. Die in Rede stehenden Polymere können neben den zur Anionenbildung befähigten Gruppen auch noch nichtionische stabilisierende Gruppen wie z.B. Poly(oxyalkylen)gruppen, insbesondere Poly(oxyethylen)- und/oder Poly(oxypropylen)- und/oder Poly(oxyethylen)(oxypropylen)gruppen enthalten.

Die Menge der in den erfindungsgemäß eingesetzten, aus (Ai) und (Aii) hergestellten Polymeren enthaltenen zur Anionenbildung befähigten Gruppen soll so hoch sein, daß die Polymere eine Säurezahl von 5 bis 200, vorzugsweise 10 bis 40, besonders bevorzugt 15 bis 30 aufweisen. Die Einführung der zur Anionenbildung befähigten Gruppen in die in Rede stehenden Polymere kann beispielsweise über die Komponenten (Aiid) und (iii) erfolgen. Die zur Anionenbildung befähigten Gruppen können ausschließlich in der Komponente (Ai) oder ausschließlich in der Komponente (Aii) oder sowohl in der Komponente (Ai) als auch in der Komponente (Aii) enthalten sein. Es ist bevorzugt, daß 50 bis 100, vorzugsweise 70 bis 100, besonders bevorzugt 100 % der zur Anionenbildung befähigten Gruppen in der Komponente (Ai) enthalten sind.

Die Einführung von Poly(oxyalkylen)gruppen in die Polymere kann über die Komponente (Aiie) oder über ethylenisch ungesättigte Monomere, die mindestens eine Poly(oxyalkylen)gruppe enthalten (z.B. Poly(oxyethylen)(meth)acrylate) erfolgen. Die Polymere sollten keine übermäßigen Mengen an Poly(oxyalkylen)gruppen enthalten, weil sonst die Feuchtigkeitsbeständigkeit der Lackfilme herabgesetzt werden kann. Der Gehalt an Poly(oxyalkylen)gruppen kann bei 1 bis 10 Gew.-%, vorzugsweise 1 bis 5 Gew.-% (bezogen auf das Gewicht des aus (Ai) und (Aii) hergestellten Polymers) liegen.

Die erfindungsgemäß eingesetzten, aus (Ai) und (Aii) hergestellten Polymere sollten vorzugsweise keine nichtionischen stabilisierenden Gruppen enthalten.

Die aus (Ai) und (Aii) hergestellten Polymere sollen vorzugsweise eine Hydroxylzahl von 0 bis 100, besonders bevorzugt 20 bis 80 aufweisen. Das zahlenmittlere Molekulargewicht der Polymere soll vorzugsweise 2000 bis 20.000, besonders bevorzugt 5000 bis 12.000 betragen.

Besonders bevorzugte Polymere sind die aus (Ai) und (Aii) hergestellten Polymere, die einen Polymolekularitätsindex Q von 5 bis 90, vorzugsweise 10 bis 30 aufweisen. Der Polymolekularitätsindex ist der Quotient M_{w} : Mₙ, wobei M_{w} für das gewichtsmittlere und Mₙ für das zahlenmittlere Molekulargewicht steht.

Als wasserlösliche bzw. wasserdispergierbare Bindemittelkomponente der Basisfarbe A des erfindungsgemäßen Mischsystems eignen sich auch wasserverdünnbare oder wasserdispergierbare Polyacrylatharze, die erhältlich sind, indem
(I) ein Gemisch aus
   (a1) einem mit (a2), (a3), (b1) und (b2) copolymerisierbaren, im wesentlichen carboxylgruppenfreien (Meth)acrylsäureester oder einem Gemisch aus solchen (Meth)acrylsäureestern und gegebenenfalls
   (a2) einem mit (a1), (a3), (b1) und (b2) copolymerisierbaren ethylenisch ungesättigten Monomeren, das mindestens eine Hydroxylgruppe pro Molekül trägt und im wesentlichen carboxylgruppenfrei ist oder einem Gemisch aus solchen Monomeren und gegebenenfalls
   a3) einem mit (a1), (a2), (b1) und (b2) copolymerisierbaren, im wesentlichen carboxylgruppenfreien ethylenisch ungesättigten Monomeren oder einem Gemisch aus solchen Monomeren
   zu einem organischen Lösemittel oder Lösemittelgemisch gegeben und in Gegenwart mindestens eines Polymerisationsinitiators polymerisiert wird und
(II) nachdem mindestens 80 Gew.-% des aus (a1), gegebenenfalls (a2) und gegebenenfalls (a3) bestehenden Gemisches zugegeben worden sind
   (b1) 60 - 100 Gew.-% eines mindestens eine Carboxylgruppe pro Molekül tragenden, mit (a1), (a2) und (a3) copolymerisierbaren ethylenisch ungesättigten Monomeren oder eines Gemisches aus solchen Monomeren zusammen mit
   (b2) 0 bis 40 Gew.-% eines carboxylgruppenfreien, mit (a1), (a2), (a3) und (b1) copolymerisierbaren ethylenisch ungesättigten Monomers oder eines Gemisches aus solchen Monomeren
   zugegeben werden und weiterpolymerisiert wird, wobei die Summe der Gewichtanteile von (b1) und (b2) stets 100 Gew.-% ergibt und (a1), (a2), (a3), (b1) und (b2) in Art und Menge so ausgewählt werden, daß das Polyacrylatharz eine Hydroxylzahl von 0 bis < 40, vorzugsweise 5 bis 35, eine Säurezahl von 20 bis 100, vorzugsweise 25 bis 50 und eine Glasübergangstemperatur (T_{G}) von -40°C bis +60°C, vorzugsweise -20°C bis +40°C, aufweist.

Die Formulierung "im wesentlichen carboxylgruppenfrei" soll ausdrücken, daß die Komponenten (a1), (a2) und (a3) einen geringen Carboxylgruppengehalt (höchstens aber soviel, daß ein aus den Komponenten (a1), (a2) und (a3) hergestelltes Polyacrylatharz eine Säurezahl von höchstens 10 hat) aufweisen können. Es ist aber bevorzugt, daß der Carboxylgruppengehalt der Komponenten (a1), (a2) und (a3) so niedrig wie möglich gehalten wird. Besonders bevorzugt werden carboxylgruppenfreie (a1), (a2) und (a3) Komponenten eingesetzt.

Zur Herstellung der erfindungsgemäß einzusetzenden Polyacrylatharze (A2) kann als Komponente (a1) jeder mit (a2), (a3), (b1) und (b2) copolymerisierbare, im we- sentlichen carboxylgruppenfreie Ester der (Meth)acrylsäure oder ein Gemisch aus solchen (Meth)acrylsäureestern eingesetzt werden. Als Beispiele werden Alkylacrylate und Alkylmethacrylate mit bis zu 20 Kohlenstoffatomen im Alkylrest, wie z.B. Methyl-, Ethyl-, Propyl-, Butyl-, Hexyl-, Ethylhexyl-, Stearyl- und Laurylacrylat und -methacrylat und cycloaliphatische (Meth)acrylsäureester, wie z.B. Cyclohexyl(meth)acrylat, genannt. Bevorzugt werden Gemische aus Alkylacrylaten und/oder Alkylmethacrylaten als (a1) Komponente eingesetzt, die zu mindestens 25 Gew.-% aus n-Butyl- und/oder t-Butylacrylat und/oder n-Butyl- und/oder t-Butylmethacrylat bestehen.

Als Komponente (a2) können alle mit (a1), (a3), (b1) und (b2) copolymerisierbaren ethylenisch ungesättigten Monomere, die mindestens eine Hydroxylgruppe pro Molekül tragen und im wesentlichen carboxylgruppenfrei sind, oder ein Gemisch aus solchen Monomeren eingesetzt werden. Als Beispiele werden Hydroxylalkylester der Acrylsäure, Methacrylsäure oder einer anderen α,β-ethylenisch ungesättigten Carbonsäure genannt. Diese Ester können sich von einem Alkylenglykol ableiten, das mit der Säure verestert ist, oder sie können durch Umsetzung der Säure mit einem Alkylenoxid erhalten werden. Als Komponente (a2) werden vorzugsweise Hydroxyalkylester der Acrylsäure und Methacrylsäure, in denen die Hydroxyalkylgruppe bis zu 4 Kohlenstoffatome enthält Umsetzungsprodukte aus cyclischen Estern, wie z.B. ε-Caprolacton und diesen Hydroxyalkylestern, oder Mischungen aus diesen Hydroxyalkylestern bzw. ε-caprolactonmodifizierten Hydroxyalkylestern eingesetzt. Als Beispiele für derartige Hydroxyalkylester werden 2-Hydroxyethylacrylat, 2-Hydroxypropylacrylat, 3-Hydroxypropylacrylat, 2-Hydroxypropylmethacrylat, 3-Hydroxypropylmethacrylat, 2-Hydroxyethylmethacrylat, 4-Hydroxybutylacrylat und 4-Hydroxybutylmethacrylat. Entsprechende Ester von anderen ungesättigten Säuren, wie z.B. Ethacrylsäure, Crotonsäure und ähnliche Säuren mit bis zu etwa 6 Kohlenstoffatomen pro Molekül, können auch eingesetzt werden.

Als Komponente (a3) können alle mit (a1), (a2), (b1) und (b2) copolymerisierbaren, im wesentlichen carboxylgruppenfreien ethylenisch ungesättigten Monomere oder Gemische aus solchen Monomeren eingesetzt werden. Als Komponente (a3) werden vorzugsweise vinylaromatische Kohlenwasserstoffe, wie Styrol, α-Alkylstyrol und Vinyltoluol, eingesetzt.

Die Komponenten (a1), gegebenenfalls (a2) und gegebenenfalls (a3) werden gegebenenfalls in einem geeigneten organischen Lösemittel gemischt und zu einem organischen Lösemittel oder Lösemittelgemisch gegeben und dort in Gegenwart mindestens eines Polymerisationsinitiators polymerisiert. Als organische Lösemittel und Polymerisationsinitiatoren werden die für die Herstellung von Polyacrylatharzen üblichen und für die Herstellung von wäßrigen Dispersionen geeigneten Lösemittel und Polymerisationsinitiatoren eingesetzt. Als Beispiele für brauchbare Lösemittel werden Butylglykol, 2-Methoxypropanol, n-Butanol, Methoxybutanol, n-Propanol, Ethylenglykolmonoethylether, Ethylenglykolmonobutylether, Diethylenglykoldiethylether, Diethylenglykolmonobutylether und 3-Methyl-3-methoxybutanol genannt. Als Beispiele für brauchbare Polymerisationsinitiatoren werden freie Radikale bildende Initiatoren, wie z.B. Benzylperoxid, Azobisisobutyronitril und t-Butylperbenzoat genannt. Die Polymerisation wird bei einer Temperatur von 80 bis 160°C, vorzugsweise 120 bis 160°C durchgeführt. Das Gemisch aus (al), gegebenenfalls (a2) und gegebenenfalls (a3) wird innerhalb von 2 bis 8 Stunden, vorzugsweise innerhalb von 3 bis 6 Stunden zu dem organischen Lösemittel oder Lösemittelgemisch zugegeben und dort in Gegenwart mindestens eines freie Radikale bildenden Initiators polymerisiert.

Nachdem mindestens 80 Gew.-%, vorzugsweise 100 Gew.-% der aus (a1), gegebenenfalls (a2) und gegebenenfalls (a3) bestehenden Mischung zugegeben worden sind, werden in der Stufe (II)
(b1) 60 - 100 Gew.-% eines mindestens eine Carboxylgruppe pro Molekül tragenden, mit (a1), (a2) und (a3) copolymerisierbaren ethylenisch ungesättigten Monomeren oder eines Gemisches aus solchen Monome-ren zusammen mit
(b2) 0 - 40 Gew.-% eines carboxylgruppenfreien, mit (a1), (a2), (a3) und (b1) copolymerisierbaren ethylenisch ungesättigten Monomers oder eines Gemisches aus solchen Monomeren
zugegeben und so lange weiterpolymerisiert, bis die in Stufe (I) und (II) zugegebenen Monomere im wesentlichen vollständig umgesetzt worden sind.

Es ist bevorzugt, in Stufe (II) 100 Gew.-% der Komponente (b1) einzusetzen.

Als Komponente (b1) kann jedes mindestens eine Carboxylgruppe pro Molekül tragende, mit (a1), (a2) und (a3) copolymerisierbare ethylenisch ungesättigte Monomer oder ein Gemisch aus solchen Monomeren eingesetzt werden. Als Komponenten (b1) werden vorzugsweise Acrylsäure und/oder Methacrylsäure eingesetzt. Es können aber auch andere ethylenisch ungesättigte Säuren mit bis zu 6 Kohlenstoffatomen im Molekül eingesetzt werden. Als Beispiele für solche Säuren werden Ethacrylsäure, Crotonsäure, Maleinsäure, Fumarsäure und Itaconsäure genannt.
Als Komponente (b1) können auch Maleinsäureremono(meth)acryloyloxiethylester, Bernsteinsäuremono(meth)-acryloyloxiethylester und Phtalsäuremono(meth)acryloyloxiethylester eingesetzt werden.
Als Komponente (b2) kann jedes mit (a1), (a2), (a3) und (b1) copolymerisierbare ethylenisch ungesättigte Monomer oder ein Gemisch aus solchen Monomeren eingesetzt werden. Als Komponente (b2) können alle bei der Beschreibung der Komponenten (a1), (a2) und (a3) aufgezählten Monomere eingesetzt werden.

Die Komponenten (b1) und gegebenenfalls (b2) werden vorzugsweise innerhalb von 10 bis 60 Minuten, besonders bevorzugt innerhalb von 15 bis 45 Minuten zugegeben.

Nach Beendigung der Zugabe der Monomeren (b1) und gegebenenfalls (b2) wird so lange weiterpolymerisiert, bis alle eingesetzten Monomeren im wesentlichen vollständig umgesetzt worden sind.

Die Komponenten (a1), (a2), (a3), (b1) und (b2) werden in Art und Menge so ausgewählt, daß das Reaktionsprodukt eine Hydroxylzahl von 0 bis < 40, vorzugsweise 5 bis 35, eine Säurezahl von 20 bis 100, vorzugsweise 25 bis 50 und eine Glasübergangstemperatur (T_{G}) von -40°C bis +60°C, vorzugsweise -20°C bis +40°C, aufweist.

Die Menge und Zugabegeschwindigkeit des Initiators wird vorzugsweise so gewählt, daß ein Polyacrylatharz mit einem zahlenmittleren Molekulargewicht von 2500 bis 20000 erhalten wird. Es ist bevorzugt, die Initiatorzugabe zum gleichen Zeitpunkt wie die Zugabe der Mischung aus den Komponenten (a1), (a2) und gegebenenfalls (a3) zu beginnen und etwa eine halbe Stunde nachdem die Zugabe der Komponente (b1) und gegebenenfalls (b2) beendet worden ist, zu beenden. Der Initiator wird vorzugsweise in konstanter Menge pro Zeiteinheit zugegeben. Nach Beendigung der Initiatorzugabe wird das Reaktionsgemisch noch so lange (in der Regel etwa 1 1/2 Stunden) auf Polymerisationstemperatur gehalten, bis alle eingesetzten Monomere im wesentlichen vollständig umgesetzt worden sind. "Im wesentlichen vollständig umgesetzt" soll bedeuten, daß vorzugsweise 100 Gew.-% der eingesetzten Monomere umgesetzt worden sind, daß es aber auch möglich ist, daß ein geringer Restmonomerengehalt von höchstens bis zu etwa 0,5 Gew.-%, bezogen auf das Gewicht der Reaktionsmischung unumgesetzt zurückbleiben kann.

Die Polyacrylatharze (A2) werden hergestellt, indem 40 bis 87,5 Gew.-%, vorzugsweise 55 bis 80 Gew.-% der Komponente (a1), 0 bis 45 Gew.-%, vorzugsweise 12 bis 35 Gew.-% der Komponente (a2), 0 bis 25 Gew.-% vorzugsweise 8 bis 18 Gew.-% der Komponente (a3), 2,5 bis 15 Gew.-%, vorzugsweise 3 bis 7 Gew.-% der Komponente (b1) und 0 bis 6 Gew.-% der Komponente (b2) eingesetzt werden, wobei die Summe der Gewichtsanteile von (a1), (a2), (a3), (b1) und (b2) stets 100 Gew.-% ergibt.

Als Bindemittel können in den Basisfarben A selbstverständlich auch Mischungen der genannten Bindemittel (A1) und (A2) sowie zusätzlich andere wasserverdünnbare bzw. wasserdispergierbare Bindemittel eingesetzt werden.

Es ist erfindungswesentlich, daß die Basisfarben A im wesentlichen wasserfrei, bevorzugt völlig wasserfrei sind. Der Wassergehalt der Basisfarben sollte weniger als 5 Gew.-%, bezogen auf das Gesamtgewicht der Basisfarbe, betragen.

Als Lösemittel enthält die Basisfarbe ein oder mehrere organische Lösemittel. Beispiele für geeignete Lösemittel sind insbesondere wasserlösliche bzw. wasserverdünnbare Lösemittel, wie z.B. Alkohole, Ester, Ketone, Ketoester, Glykoletherester u.ä. Bevorzugt eingesetzt werden Alkohole und Glykolether, besonders bevorzugt Butylglykol und Butanole.

Es besteht dabei die Möglichkeit, bereits bei der Herstellung der Bindemittel Lösemittel einzusetzen, die auch später als Lösemittel in der Basisfarbe verbleiben. Häufiger wird jedoch zur Herstellung der Bindemittel ein anderes Lösungsmittel eingesetzt, das nach der Herstellung der Bindemittel durch Vakuumdestillation oder Dünnschichtverdampfung schonend abdestilliert und durch ein Lösemittel ersetzt wird, das in der Bindemittellösung verbleibt, die dann in der Basisfarbe eingesetzt wird. Höhersiedende Lösemittel sollten wasserlöslich sein und verbleiben in der Polyurethanharzlösung, die in der Basisfarbe eingesetzt wird, um das Zusammenfließen der Polymerteilchen während der Filmbildung zu erleichtern.

So erfolgt beispielsweise die Herstellung der acrylierten Polyurethanharzlösung in einem Keton, wie z. B. Methylethylketon oder Aceton. Nach Zugabe von Butylglykol erfolgt anschließend der Lösemittelaustausch durch destillative Entfernung des Ketons (Methylethylketon, Aceton). Besonders bevorzugt sind als Lösemittel für die Herstellung des Polyurethanharzes Methoxipropylacetat, Ethoxiethylacetat und N-Methylpyrrolin, die nicht ausgetauscht werden müssen (kein aktiver Wasserstoff) und in der Komponente A verbleiben können. Ggf. können diese Lösemittel für die Herstellung der Polyurethanharze auch im Gemisch mit Ketonen eingesetzt werden, wobei die Ketone aber nicht in der Basisfarbe verbleiben, sondern nach Herstellung des Polyurethanharzes ausgetauscht werden.

Die Komponente A kann außerdem noch übliche Hilfs- und Zusatzstoffe enthalten. Beispiele für derartige Additive sind Entschäumer, Dispergierhilfsmittel, Emulgatoren, Verlaufsmittel u.a.

Die Herstellung der Komponente A erfolgt nach dem Fachmann bekannten Methoden durch Mischen und ggf. Dispergieren der einzelnen Komponenten. So erfolgt die Einarbeitung von farbgebenden Pigmenten üblicherweise durch Anreiben (Dispergieren) der jeweiligen Pigmente mit einem oder mehreren der obenbeschriebenen Bindemittel, die bevorzugt in Form ihrer Lösungen in organischen Lösemitteln eingesetzt werden. Ggf. kann zum Anreiben noch weiteres organisches Lösemittel zugesetzt werden. Das Anreiben dieser Pigmente erfolgt mit Hilfe üblicher Vorrichtungen, wie beispielsweise Perlmühlen und Sandmühlen.

Die Einarbeitung der Effektpigmente erfolgt üblicherweise durch homogenes Mischen der Effektpigmente mit einem oder mehreren Lösemitteln. Diese Mischung wird dann in eine Mischung eines oder mehrerer der obenbeschriebenen Bindemittel, ggf. unter Zusatz von weiteren organischen Lösemitteln, mittels eines Rührers oder Dissolvers eingerührt. Die Bindemittel werden bevorzugt in Form ihrer Lösungen in organischen Lösemitteln eingesetzt.

Die jeweiligen Mengenverhältnisse an Pigment, Bindemittel und Lösemittel richten sich dabei, wie dem Fachmann geläufig ist, nach dem Fließverhalten der Pigmentpaste und sind damit abhängig von dem jeweils verwendeten Pigment.

Einen weiteren erfindungswesentlichen Bestandteil des Mischsystems stellt die wasserhaltige Komponente B dar. Denkbar ist der Einsatz einer Komponente B, die nur entionisiertes Wasser enthält und somit nur zur Einstellung der Verarbeitungsviskosität bzw. des Verarbeitungsfestkörpers der Basisfarben dient. Bevorzugt enthält die Komponente B jedoch mindestens ein rheologiesteuerndes Additiv. Ggf. kann die Komponente B noch weitere Hilfs- und Zusatzstoffe, ein oder mehrere wasserverdünnbare bzw. wasserdispergierbare Bindemittel und organische Lösemittel enthalten.

Als rheologiesteuerndes Additiv kommen vernetzte polymere Mikroteilchen, wie sie beispielsweise in der EP-A-38127 offenbart sind, und/oder andere übliche rheologische Additive zum Einsatz. So wirken als Verdicker beispielsweise anorganische Schichtsilikate, wie z.B. Aluminium-Magnesium-Silikate, Natrium-Magnesium-Schichtsilikate und Natrium-Magnesium-Fluor-Lithium-Schichtsilikate des Montmorillonit-Typs sowie synthetische Polymere mit ionischen und/oder assoziativ wirkenden Gruppen, wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder auch hydrophob modifizierte ethoxilierte Urethane oder Polyacrylate. Bevorzugt werden als Verdicker anorganische Schichtsilikate eingesetzt. Besonders bevorzugt ist eine Kombination aus carboxylgruppenhaltigem Polyacrylat-Copolymer mit einer Säurezahl von 60 bis 780, bevorzugt 200 bis 500 mg KOH/g und einem Natrium-Magnesium-Schichtsilikat.

Bevorzugt wird das Natrium-Magnesium-Schichtsilikat in Form einer wäßrigen Paste eingesetzt. Besonders bevorzugte Pasten enthalten entweder 3 Gew.-% Schichtsilikat sowie 3 Gew.-% Polypropylenglykol oder 2 Gew.-% Schichtsilikat und 0,6 Gew.-% Polypropylenglykol oder 2 Gew.-% Schichtsilikat und 2 Gew.-% anderer handelsüblicher oberflächenaktiver Substanzen, wobei alle Prozentangaben auf das Gesamtgewicht der Paste bezogen sind. Diese wäßrigen Pasten des Verdickungsmittels sollten nur der Komponente B und nicht der Komponente A zugesetzt werden.

Für den Einsatz in der Komponente B geeignet sind die bereits bei der Beschreibung der Komponente A aufgeführten wasserverdünnbaren bzw. wasserdispergierbaren Polyacrylat- und acrylierten Polyurethanharze, sowie desweiteren wasserverdünnbare bzw. wasserdispergierbare andere Polyurethan-, andere Polyacrylat-, Polyester- und Aminoplastharze.Diese Bindemittel können beim Einsatz in der Komponente B nicht nur als organische Lösung sondern auch bevorzugt in einer wasserenthaltenden Form eingesetzt werden. Diese Überführung der Harze in die wäßrige Phase erfolgt beispielsweise durch Neutralisation der Trägergruppen (zur Anionen- oder Kationenbildung fähige Gruppen, wie zum Beispiel Carboxylgruppen) und anschließendes Verdünnen mit Wasser, ggf. unter vorheriger teilweiser Entfernung des bei der Herstellung des Harzes eingesetzten organischen Lösemittels oder durch direkten Aufbau des Harzes in Gegenwart von Wasser. Wegen weiterer Einzelheiten sei auf die Literatur verwiesen, in denen die Herstellung der Harze beschrieben ist (vgl. z.B. DE-OS3210051, DE-OS 2624442, DE-OS 3739332, US-PS 4,719,132, EP-A-89497, US-PS 4,558,090, US-PS 4,489,135, EP-A-38127, DE-OS3628124, EP-A-158099, DE-OS2926584, EP-A-195931 und DE-OS3321180).

Ferner sind als Bindemittel für die Komponente B auch wasserverdünnbare bzw. wasserdispergierbare Polyurethanharze geeignet, die sich nicht in Form organischer Lösungen darstellen lassen. Dabei handelt es sich insbesondere um Polyurethanharze, bei denen das NCO-gruppenhaltige Präpolymer mit einem Polyamin als Modifizierungsmittel umgesetzt wurde.

Die Herstellung dieser Polyurethanharze erfolgt üblicherweise derart, daß ein NCO-Präpolymer zunächst wasserverdünnbar bzw. wasserdispergierbar gemacht wird. Hierzu werden beispielsweise die anionischen Gruppen des NCO-Präpolymeren mit einem tertiären Amin mindestens teilweise neutralisiert.

Die dadurch geschaffene Zunahme der Dispergierbarkeit in Wasser reicht für eine unendliche Verdünnbarkeit aus. Sie reicht auch aus, um das neutralisierte Polyurethan beständig zu dispergieren. Die noch vorhandenen Isocyanatgruppen werden mit dem Modifizierungsmittel umgesetzt. Diese Reaktion führt zu einer weiteren Verknüpfung und Erhöhung des Molekulargewichts. Als Modifizierungsmittel werden wasserlösliche Verbindungen bevorzugt, weil sie die Dispergierbarkeit des polymeren Endproduktes in Wasser erhöhen. Geeignet sind organische Diamine, weil sie in der Regel die höchste Molmasse aufbauen, ohne das Harz zu gelieren. Voraussetzung hierfür ist jedoch, daß das Präpolymer vor der Kettenverlängerung in Wasser dispergiert wird oder in anderer ausreichender Verdünnung vorliegt. Die Menge des Modifizierungsmittels wird von seiner Funktionalität und vom NCO-Gehalt des Pröpolymeren bestimmt.

Die Anwesenheit von überschüssigem aktiven Wasserstoff, insbesondere in Form von primären Aminogruppen, kann zu Polymeren mit unerwünscht niedriger Molmassen führen. Die Kettenverlängerung kann wenigstens teilweise mit einem Polyamin erfolgen, das mindestens drei Aminogruppen mit einem reaktionsfähigen Wasserstoff aufweist. Dieser Polyamin-Typ kann in einer solchen Menge eingesetzt werden, daß nach der Verlängerung des Polymers nicht umgesetzte Aminstickstoffatome mit 1 oder 2 reaktionsfähigen Wasserstoffatomen vorliegen. Solche brauchbaren Polyamine sind Diethylentriamin, Triethylentetramin, Dipropylentriamin und Dibutylentriamin. Bevorzugte Polyamine sind die Alkyl- oder Cycloalkyltriamine, wie Diethylentriamin. Um ein Gelieren bei der Kettenverlängerung zu verhindern, können auch kleine Anteile von Manoaminen, wie Ethylhexylamin zugesetzt werden.

Ferner sind als wasserverdünnbare bzw. wasserdispergierbare Bindemittel für die Komponente B auch die in der DE-OS3841540 beschriebenen wasserverdünnbaren Emulsionspolymere geeignet. Diese Emulsionspolymere sind erhältlich, indem
a) in einer ersten Stufe 10 bis 90 Gewichtsteile eines ethylenisch ungesättigten Monomeren oder eines Gemisches aus ethylenisch ungesättigten Monomeren in wäßriger Phase in Gegenwart eines oder mehrerer Emulgatoren und eines oder mehrerer radikalbildender Initiatoren polymerisiert werden, wobei das ethylenisch ungesättigte Monomer bzw. das Gemisch aus ethylenisch ungesättigten Monomeren so ausgewählt wird, daß in der ersten Stufe ein Polymer mit einer Glasübergangstemperatur (T_{G1}) von + 30 bis + 110 °C erhalten wird, und,
b) nachdem mindestens 80 Gew.-% des in der ersten Stufe eingesetzten ethylenisch ungesättigten Monomers bzw. Monomerengemisches umgesetzt worden sind, in einer zweiten Stufe 90 bis 10 Gewichtsteile eines ethylenisch ungesättigten Monomeren oder eines Gemisches aus ethylenisch ungesättigten Monomeren in Gegenwart des in der ersten Stufe erhaltenen Polymers polymerisiert werden, wobei das in der zweiten Stufe eingesetzte Monomer bzw. das in der zweiten Stufe eingesetzte Gemisch aus ethylenisch ungesättigten Monomeren so ausgewählt wird, daß eine alleinige Polymerisation des in der zweiten Stufe eingesetzten Monomers bzw. des in der zweiten Stufe eingesetzten Gemisches aus ethylenisch ungesättigten Monomeren zu einem Polymer mit einer Glasübergangstemperatur (T_{G2}) von - 60 bis + 20 °C führen würde, und wobei die Reaktionsbedingungen so gewählt werden, daß das erhaltene Emulsionspolymer eine zahlenmittlere Molmasse von 200.000 bis 2.000.000 aufweist und wobei das in der ersten Stufe eingesetzte ethylenisch ungesättigte Monomer bzw. Monomerengemisch und das in der zweiten Stufe eingesetzte ethylenisch ungesättigte Monomer bzw. Monomerengemisch in Art und Menge so ausgewählt werden, daß das erhaltene Emulsionspolymer eine Hydroxylzahl von 2 bis 100 mgKOH/g, bevorzugt 10 bis 50 mgKOH/g, aufweist und die Differenz T_{G1} - T_{G2} 10 bis 170 °C, vorzugsweise 80 bis 150 °C, beträgt.

Die eingesetzten wasserverdünnbaren Emulsionspolymere sind durch eine zweistufige Emulsionspolymerisation in einem wäßrigen Medium in den bekannten Apparaturen nach den bekannten Verfahren herstellbar.

Bezüglich näherer Einzelheiten wird auf die DE-OS 38 41 540 verwiesen.

Die Komponente B kann außerdem ggf. noch ein oder mehrere organische Lösemittel sowie ggf. noch weitere übliche Hilfs- und Zusatzstoffe enthalten. Beispiele für geeignete organische Lösemittel sind die bereits bei der Beschreibung der Komponente A aufgeführten Lösemittel. Der Gehalt an organischem Lösemittel beträgt überlicherweise 0 bis 3 Gew.- %, bezogen auf das Gesamtgewicht der Komponente B. Beispiele für geeignete Hilfs- und Zusatzstoffe sind ebenfalls die bei der Beschreibung der Komponente A genannten Additive. Die Einsatzmenge dieser Additive beträgt üblicherweise 0 bis 10 Gew.-%, bezogen auf das Gesamtgewicht der Komponente B.

Falls die Komponente B Bindemittel enthält, werden als Bindemittel bevorzugt wasserverdünnbare bzw. wasserdispergierbare Polyurethanharze und/oder Aminoplastharze oder Polyacrylatharze eingesetzt.

Das erfindungsgemäße Mischsystem zur Herstellung wäßriger Überzugsmittel mit genau festgelegter Tönung besteht aus verschiedenen pigmenthaltigen Basisfarben (Komponente A) und mindestens einer wasserenthaltenden Komponente B. Je nach gewünschtem Farbton des wäßrigen Überzugsmittels werden dann zur Herstellung des wäßrigen Überzugsmittels eine oder mehrere Basisfarben des Mischsystems mit mindestens einer wasserenthaltenden Komponente B direkt vor der Applikation des wäßrigen Überzugsmittels gemischt. Typische Mischsysteme bestehen aus 15 bis 60, bevorzugt 20 bis 40, verschiedenen Basisfarben und aus 1 bis 5, bevorzugt 1 bis 3, verschiedenen Komponenten B.
Bezüglich der Beschreibung üblicher Mischmaschinen für die Bevorratung und Lagerung der Basisfarben und Mischungen wird nur auf die Literatur verwiesen, wie z. B. das Glasurit-Handbuch, 11. Auflage, Kurt R., Vincentz-Verlag, Hannover 1984, Seiten 544 bis 547.

Bevorzugte erfindungsgemäße Mischsysteme werden erhalten, wenn als Komponente A Basisfaben eingesetzt werden, die
Aa) 0,5 bis 70 Gew.-% mindestens eines Effektpigments und/oder mindestens eines farbgebenden Pigments,
Ab) 10 bis 80 Gew.-% mindestens eines wasserverdünnbaren oder wasserdispergierbaren Bindemittels und
Ac) mindestens ein organisches Lösemittel enthalten,
wobei die Summe der Gewichtsanteile der Komponenten Aa bis Ac jeweils 100 Gew.-% beträgt.

Außerdem können die Basisfarben noch 0 bis 10 Gew.-%, bezogen auf das Gesamtgewicht der Komponente A, übliche Hilfs- und Zusatzstoffe enthalten. Besonders bevorzugt wird das Mischsystem aus Basisfarben, die nur Effektpigmente enthalten und Basisfarben, die nur farbgebende Pigmente enthalten, aufgebaut.

Besonders bevorzugte Basisfarben (Komponente A) auf der Basis von Effektpigmenten enthalten
Aa) 0,5 bis 50 Gew.-% mindestens eines Effektpigments,
Ab) 20 bis 80 Gew.-% mindestens eines wasserverdünnbaren oder wasserdispergierbaren Bindemittels und
Ac) mindestens ein organisches Lösemittel, wobei die Summe der Gewichtsanteile der Komponenten Aa bis Ac jeweils 100 Gew.-% beträgt.

Besonders bevorzugte Basisfarben (Komponente A) auf der Basis anorganischer farbgebender Pigmente enthalten
Aa) 1 bis 70 Gew.-% mindestens eines anorganischen farbgebenden Pigments,
Ab) 10 bis 80 Gew.-% mindestens eines wasserverdünnbaren oder wasserdispergierbaren Bindemittels und
Ac) mindestens ein organisches Lösemittel, wobei die Summe der Gewichtsanteile der Komponenten Aa bis Ac jeweils 100 Gew.-% beträgt.

Besonders bevorzugte Basisfarben (Komponente A) auf der Basis organischer farbgebender Pigmente enthalten
Aa) 1 bis 30 Gew.-% mindestens eines organischen farbgebenden Pigments,
Ab) 10 bis 80 Gew.-% mindestens eines wasserverdünnbaren oder wasserdispergierbaren Bindemittels und
Ac) mindestens ein organisches Lösemittel, wobei die Summe der Gewichtsanteile der Komponenten Aa bis Ac jeweils 100 Gew.-% beträgt.

Selbstverständlich können auch Basisfarben als Komponente A eingesetzt werden, die eine Kombination aus mindestens einem organischen farbgebenden und mindestens einem anorganischen farbgebenden Pigment enthalten.

Als Komponente B werden bevorzugt Mischungen eingesetzt, die
Ba) 60 bis 100 Gew.-%, bevorzugt 80 bis 97 Gew.-%, Wasser,
Bb) 0 bis 10 Gew.-%, bevorzugt 2 bis 5 Gew.-%, mindestens eines rheologiesteuernden Additives, wobei diese Menge auf das Gewicht des reinen Additivs ohne Lösemittelanteil bezogen ist und
Bc) ggf. mindestens ein wasserverdünnbares oder wasserdispergierbares Bindemittel
enthalten, wobei die Summe der Gewichtsanteile der Komponenten Ba bis Bc jeweils 100 Gew.-% beträgt.

Die verschiedenen Basisfarben A werden zur Herstellung der wäßrigen Überzugsmittel in einem solchen Verhältnis gemischt, daß der gewünschte Farbton resultiert. Das Mischungsverhältnis der Komponente A mit der oder den verschiedenen Komponenten B wird durch die Forderung bestimmt, daß das resultierende Überzugsmittel unabhängig vom Farbton die gewünschte Viskosität, den gewünschten Festkörpergehalt und den gewünschten Gehalt an organischen Lösemitteln usw. aufweist.

Der Festkörpergehalt (Menge an eingesetztem festen Bindemittel plus Menge an eingesetztem Pigment) sowie der Gehalt an organischem Lösemittel u.ä. variiert mit dem Verwendungszweck der wäßrigen Überzugsmittel. Im Bereich der Autoreparaturlacke liegt der Festkörpergehalt für Metalliclacke bevorzugt bei 7 bis 25 Gew.-% und für unifarbige Lacke bevorzugt bei 10 bis 45 Gew.-%, jeweils bezogen auf das Gesamtgewicht der wäßrigen Überzugsmittel.

Eine bevorzugte Ausführungsform des erfindungsgemäßen Mischsystems ist ein Mischsystem, bei dem alle Basisfarben das gleiche bzw. im Falle einer Bindemittelmischung die gleichen Bindemittel enthalten. Besonders bevorzugt weisen alle Basisfarben des Mischsystems das gleiche Verhältnis der Menge an eingesetztem festen Bindemittel (d.h. ohne Lösemittel) zu der Menge an eingesetztem organischen Lösemittel auf. Dies gewährleistet, daß - unabhängig vom gewünschten Farbton und somit unabhängig vom Mischungsverhältnis der verschiedenen Basisfarben - die resultierende Mischung der verschiedenen Basisfarben stets das gleiche Bindemittel:Lösemittel-Verhältnis hat und damit unabhängig vom Farbton ein etwa gleichbleibendes Abdunstverhalten (Trocknung) sowie eine ähnliche Rheologie zeigt. Dieses konstante Bindemittel:Lösemittel-Verhältnis in allen Basisfarben gewährleistet außerdem, daß auch ggf. das Verhältnis Bindemittel (gelöst):Bindemittel (dispergiert) im fertigen wäßrigen Lack konstant ist, sofern die Komponente B Bindemittel enthält.
Der Einsatz von verschiedenen Basisfarben mit jeweils identischem Bindemittel:Lösungsmittel-Verhältnis weist den praktischen Vorteil auf, daß unabhängig vom jeweils gewünschten Farbton konstante Filmeigenschaften erzielt werden.

Wird in den Basisfarben jeweils eine Mischung verschiedener Bindemittel eingesetzt, so sollte auch das Mischungsverhältnis der verschiedenen Bindemittel untereinander in den einzelnen Basisfarben bevorzugt jeweils konstant sein, um so nach Mischung mit der Komponente B wiederum konstante Mischungsverhältnisse hinsichtlich der Bindemittel unabhängig vom Farbton zu erzielen. Wird in der Komponente B eine Mischung der Bindemittel eingesetzt, die auch in der Komponente A verwendet werden, so sollte auch in der Komponente B das Mischungsverhältnis der verschiedenen Bindemittel untereinander bevorzugt gleich dem Mischungsverhältnis dieser Bindemittel in der Komponente A sein.
Besonders bevorzugte Mischsysteme werden erhalten, wenn die Komponente B als Bindemittel Polyurethanharzdispersionen enthält.
Die unter Verwendung des erfindungsgemäßen Mischsystems hergestellten wäßrigen Überzugsmittel können auf die verschiedensten Substrate, wie z. B. Metall, Holz, Kunststoff oder Papier aufgebracht werden. Sollen die unter Verwendung des erfindungsgemäßen Mischsystems hergestellten wäßrigen Überzugsmittel auf Kunststoff aufgebracht werden, so ist es bevorzugt, daß sowohl die Basisfarben A als auch die Komponente B kein Aminoplastharz enthalten.

Die mittels des erfindungsgemäßen Mischsystems hergestellten wäßrigen Überzugsmittel eignen sich beispielsweise auch für die Serienlackierung von Automobilen.

Insbesondere eignen sich die mittels des erfindungsgemäßen Mischsystems hergestellten wäßrigen Überzugsmittel für die Reparaturlackierung von Schadstellen, insbesondere für die Autoreparaturlackierung. Die Überzugsmittel werden in diesem Fall direkt nach ihrer Herstellung durch Mischen der Komponenten A und B auf die entsprechend vorbereitete Schadstelle (z. B. durch Spachteln und Füllern) mittels üblicher Methoden, insbesondere Spritzen, aufgebracht. Bevorzugt werden die unter Verwendung des erfindungsgemäßen Mischsystems hergestellten wäßrigen Überzugsmittel zur Erzeugung einer Basisschicht eingesetzt.

Nach Antrocknung der so hergestellten Basisschicht bei Raumtemperatur oder durch forcierte Trocknung (z.B. 10 min. bei 60°C, 80 °C oder IR-Trocknung) wird eine geeignete transparente Deckbeschichtungszusammensetzung aufgebracht. Als Decklack geeignet sind sowohl organisch gelöste als auch wäßrige 1- oder 2-Komponenten-Klarlacke sowie Pulverklarlacke. Häufig eingesetzt werden 2-Komponenten-Klarlacke auf Basis eines hydroxylgruppenhaltigen Acrylatcopolymerisates und eines Polyisocyanates. Derartige Klarlacke sind beispielsweise in den Patentanmeldungen DE 34 12 534, DE 36 09 519, DE 37 31 652 und DE 38 23 005 beschrieben. Geeignete 1-Komponenten-Klarlacke, beispielsweise auf Basis eines hydroxylgruppenhaltigen Bindemittels und eines Aminoharzhärters sind ebenfalls bekannt und beispielsweise im Kittel, Lehrbuch der Lacke und Beschichtungen, Band IV; Verlag W.A. Colomb in der H. Heeremann GmbH, Berlin-Oberschwandorf 1976 beschrieben. Selbstverständlich sind aber auch alle anderen, hier nicht explizit genannten Klarlacke geeignet.

Nach einer ggf. erforderlichen Ablüftzeit von etwa 5 Minuten wird dann die Basisschicht zusammen mit der Deckschicht getrocknet. Bei Verwendung von 2-Komponenten-Klarlacken erfolgt die Trocknung i.a. bei Temperaturen von unter 100 °C, bevorzugt von unter 80 °C. Die Trockenfilmschichtdicken der Basisschicht liegen i. a. zwischen 5 und 25 µm, die der Deckschicht i.a. zwischen 30 und 70 µm.

Bei Verwendung von 1-Komponenten-Klarlacken wird die Basisschicht zusammen mit der Deckschicht bei erhöhten Temperaturen, z.B. ca. 120°C, getrocknet. Die Trockenfilmschichtdicken der Deckschicht liegen hier i.a. zwischen 30 und 50 µm.

Im folgenden wird die Erfindung anhand von Ausführungsbeispielen näher erläutert. Alle Angaben über Teile und Prozente stellen dabei Gewichtsangaben dar, falls nicht ausdrücklich etwas anderes vermerkt ist.

### Herstellung der Polyacrylatharzlösungen I und II für die Komponente A:

In einem Gefäß für die Polymerisation werden 471,5 g Solvenon PM vorgelegt und auf 110°C aufgeheizt. Gleichzeitig beginnend werden innerhalb von 4 h 1424,5 g der jeweiligen, unten angegebenen Monomerenmischungen 1 und 2 und innerhalb von 4,5 h eine Mischung aus 90 g tert.-Butylperoxyethylhexanoat und 210 g Solvenon PM bei der Reaktionstemperatur von 110°C zugegeben. Nach 3,5 h Dosierzeit wird ein dritter Zulauf einer Mischung aus 142,5 g der Monomerenmischung 1 bzw. 2 und 75 g Acrylsäure gleichmäßig innerhalb 1 h zugegeben. Nach Beendigung der Zuläufe wird das Reaktionsgemisch noch 1 h bei 110°C gealtert.

### Monomerenmischung 1:

| | |
|---|---|
| 300 g | n-Butylmethacrylat |
| 300 g | Metyhlmethacrylat |
| 225 g | Styrol |
| 150 g | Laurylmethacrylat |
| 337 g | tert.-Butylacrylat |
| 112,5 g | Hydroxiethylmethacrylat |

### Monomerenmischung 2:

| | |
|---|---|
| 300 g | n-Butylmethacrylat |
| 300 g | Methylmethacrylat |
| 225 g | Styrol |
| 150 g | Laurylmethacrylat |
| 450 g | tert.-Butylacrylat |

| Polyacrylatlösung | I | II |
|---|---|---|
| OH-Zahl | 32 | 0 |
| Festkörper | 69,1 % | 68,3 % |

### Herstellung der Polvurethanharzdispersion III für die Komponente A (Vergleich)

In einem Gefäß, das mit einem Rührer, einem Thermometer und einer Füllkörperkolonne ausgestattet ist, werden 819,9 g einer dimeren technischen C18-Fettsäure (Pripol 101 der Firma Unichema), 269,3 g 1,6-Hexandiol, 331,5 g Isophthalsäure, 236,6 g Neopentylglykol und 58,6 g Xylol zum Schmelzen gebracht. Anschließend wird die Temperatur unter Rühren und Stickstoff so gesteigert, daß die Kolonnenkopftemperatur 140°C nicht übersteigt. Bei maximaler Temperatur des Reaktionsgemisches von 220°C wird so lange weiterkondensiert, bis eine Säurezahl von 5 erreicht ist. Die Temperatur wird auf 160°C abgesenkt und 0,5 h ein Vakuum von 100 mbar angelegt. Es wird eine Säurezahl zwischen 3 und 4 erreicht. Nach Abkühlen auf 80°C wird der erhaltene Polyester mit Methylethylketon auf einen Festkörper von 73 % verdünnt. In einem für Polyurethanreaktionen geeigneten Stahlgefäß mit Rückflußkühler, Thermometer und Rührer werden 283,0 g m-Tetramethylxyloldiisocyanat (Handelsname TMXD, der American Cyanamid Company), 264,0 g Methylethylketon, 56,1 g Dimethylolpropionsäure, 9,2 g Neopentylglykol und 882,8 g der zuvor beschriebenen Polyesterlösung zusammen eingewogen und auf 82°C aufgeheizt. Wenn ein NCO-Wert der Lösung von 1,1 erreicht ist, werden 52,0 g Trimethylolpropan zudosiert. Die Reaktion wird bis zu einem NCO-Wert < 0,1 durchgeführt. Dann gibt man 637 g Butylglykol hinzu und destilliert unter Vakuum ein Butylglykol/Methylethylketon-Gemisch ab bis das übergehende Gemisch einen Brechnungsindex von 1,4175 aufweist. Danach werden bei 82°C 34,4 g N,N-Dimethylethanolamin zudosiert, und es wird 30 min weiter gerührt. Abschließend wird mit Butylglykol ein Festkörper von 60 % eingestellt.

### Herstellung einer Polyurethanharzdispersion B1 für die Komponente B

In einem geeigneten Reaktionsgefäß mit Rührer, Rückflußkühler und Zulaufgefäß werden unter Schutzgas 686,3 g eines Polyesters mit einem zahlenmittleren Molekulargewicht von 1400 auf Basis einer handelsüblichen ungesättigten Dimerfettsäure (mit einer Jodzahl von 10 mgJ₂/g, einem Monomergehalt von maximal 0,1 %, einem Trimergehalt von maximal 2 %, einer Säurezahl von 195 bis 200 mgKOH/g und einer Verseifungszahl von 197 bis 202 mgKOH/g, Isophthalsäure und Hexandiol vorgelegt und nacheinander mit 10,8 g Hexandiol, 55,9 g Dimethylolpropionsäure, 344,9 g Methylethylketon und 303,6 4,4'-Di-(isocyanatocyclohexyl)methan versetzt. Diese Mischung wird so lange unter Rückfluß gehalten, bis der Isocyanatgehalt auf 1,0 % abgesunken ist. Anschließend werden dem Gemisch 26,7 g Trimethylolpropan zugegeben und bis zu einer Viskosität von 12 dPas (bei einer Anlösung von 1:1 = Harzlösung/N-Metyhlpyrrolidon) unter Rückfluß gehalten. Durch Zugabe von 47,7 g Butylglykol wird eventuell vorhandenes überschüssiges Isocyanat vernichtet. Anschließend werden dem Reaktionsgemisch 32,7 g Dimethylethanolamin, 2688,3 g entionisiertes Wasser und 193,0 g Butylglykol unter starkem Rühren zugegeben. Nach dem Entfernen des Methylethylketons mittels Vakuumdestillation erhält man eine Dispersion mit einem Feststoffgehalt von ca. 27 %.

### 2. Herstellung verschiedener Basisfarben

### Herstellung der Basisfarbe A1

10 Teile Chromophthalrot, 38 Teile Dowanol PnB und 51 Teile der mit Dimethylethanolamin neutralisierten Polyacrylatharzlösung I (49 Teile I; 2 Teile Dimethylolethanolamin) werden unter Rühren vermischt und in einer Laborperlmühle dispergiert.

### Herstellung der Basisfarbe A2

10 Teile Chromophthalrot, 38,4 Teile Dowanol PnB und 51,6 Teile der neutralisierten Polyacrylatharzlösung II (49,6 Teile II, 2,0 Teile Dimethylethanolamin) werden unter Rühren vermischt und in einer Laborperlmühle dispergiert.

### Herstellung der Basisfarbe V1 zum Vergleich

10 Teile Chromophthalrot, 33,5 Teile Dowanol PnB und 56,5 Teile der neutralisierten Polyurethanharzdispersion III werden unter Rühren vermischt und in einer Laborperlmühle dispergiert.

### Herstellung der pigmentfreien Komponente B

Zu 44 Teilen der Polyurethanharzdispersion B1 werden 43 Teile einer vorgequollenen wäßrigen Paste, enthaltend 3 Gew.-% eines anorganischen Natrium-Magnesium-Schichtsilikat-Verdickungsmittels und 3 Gew.-% Polypropylenglykol mit einem zahlenmittleren Molekulargewicht von 900, wobei die Prozente auf das Gesamtgewicht der Paste bezogen sind, 9 Teile entionisiertes Wasser, 0,5 Teile eines handelsüblichen Entschäumers und 3,5 Teile einer 3,5%igen Lösung eines handelsüblichen Polyacrylatverdickers in Wasser unter Rühren zugesetzt.

### Beispiele 1 und 2 und Vergleichsbeispiel Vgl. 1:

Aus den Basisfarben Al und A2 (Beispiele 1 und 2) und der Basisfarbe V1 (Vgl. 1) sowie der pigmentfreien Komponente B werden die wäßrigen Beschichtungszusammensetzungen der Beispiele 1, 2 und des Vergleichsbeispiels Vgl. 1 hergestellt, indem die jeweilige Basisfarbe direkt nach ihrer Herstellung in die Komponente B eingerührt wird. Das Mischungsverhältnis von Basisfarbe zu Komponente B beträgt jeweils 1 : 4.

Die erhaltenen Basislacke zeigen eine gute Verträglichkeit (keine Stippen, kein Koagulat).

Die Eigenschaften der Basislacke der Beispiele 1, 2 und Vgl. 1 sind in nachfolgender Tabelle dargestellt

| | T [°C] | Flußgrenze [Pa] | Thixotropie [Pa/s] | Viskosität nach 4 min [Pa·s] |
|---|---|---|---|---|
| Beispiel 1 | 20 | 1,115 | 355,9 | 0,6752 |
| Beispiel 2 | 20 | 0,6200 | 677,0 | 0,4823 |
| Vgl. 1 | 20 | 7,498 | 373,1 | 1,241 |

## Patentansprüche

1. Mischsystem aus den Komponenten A und B zur Herstellung von wasserverdünnbaren Überzugsmitteln mit genau festgelegter Tönung aus verschiedenen Basisfarben, dadurch gekennzeichnet, daß das Mischsystem
A) verschiedene Basisfarben A, die weniger als 5 Gew.-% Wasser, mindestens ein farb- und/oder effektgebendes Pigment, organisches Lösemittel, ggf. Hilfs- und Zusatzstoffe sowie mindestens ein wasserverdünnbares oder wasserdispergierbares acryliertes Polyurethanharz (A1) und/oder mindestens ein wasserverdünnbares oder wasserdispergierbares Polyacrylatharz (A2) und
B) mindestens eine wasserenthaltende, pigmentfreie Komponente B, die mindestens ein rheologiesteuerndes Additiv sowie ggf. mindestens ein wasserverdünnbares oder wasserdispergierbares Bindemittel und ggf. weitere Hilfs- und Zusatzstoffe enthält,
enthält, wobei das acrylierte Polyurethanharz (A1) erhältlich ist, indem in einem organischen Lösemittel oder in einem Gemisch organischer Lösemittel
(Ai) ethylenisch ungesättigte Monomere oder ein Gemisch ethylenisch ungesättigter Monomere in Gegenwart
(Aii) eines Polyurethanharzes, das ein zahlenmittleres Molekulargewicht von 200 bis 30.000, vorzugsweise 1000 bis 5000 aufweist und im statistischen Mittel pro Molekül 0,05 bis 1,1, vorzugsweise 0,2 bis 0,9, besonders bevorzugt 0,3 bis 0,7 polymerisierbare Doppelbindungen enthält,
polymerisiert werden und wobei das Polyacrylatharz (A2) erhältlich ist, indem
(I) ein Gemisch aus
(a1) einem mit (a2), (a3), (b1) und (b2) copolymerisierbaren, im wesentlichen carboxylgruppenfreien (Meth)acrylsäureester oder einem Gemisch aus solchen (Meth)acrylsäureestern und gegebenfalls
(a2) einem mit (a1), (a3), (b1) und (b2) copolymerisierbaren, ethylenisch ungesättigten Monomeren, das mindestens eine Hydroxylgruppe pro Molekül trägt und im wesentlichen carboxylgruppenfrei ist oder einem Gemisch aus solchen Monomeren und
gegebenenfalls
(a3) einem mit (a1), (a2), (b1) und (b2) copolymerisierbaren, im wesentlichen carboxylgruppenfreien ethylenisch ungesättigten Monomeren oder einem Gemisch aus solchen Monomeren
zu einem organischen Lösemittel oder Lösemittelgemisch gegeben und in Gegenwart mindestens eines Polymerisationsinitiators polymerisiert wird und
(II) nachdem mindestens 80 Gew.-% des aus (a1), gegebenenfalls (a2) und gegebenenfalls (a3) bestehenden Gemisches zugegeben worden sind
(b1) 60 - 100 Gew.-% eines mindestens eine Carboxylgruppe pro Molekül tragenden, mit (a1), (a2) und (a3) copolymerisierbaren ethylenisch ungesättigten Monomeren oder eines Gemisches aus solchen Monomeren zusammen mit
(b2) 0 bis 40 Gew.-% eines carboxylgruppenfreien, mit (a1), (a2), (a3) und (b1) copolymerisierbaren ethylenisch ungesättigten Monomers oder eines Gemisches aus solchen Monomeren
zugegeben werden und weiterpolymerisiert wird, wobei die Summe der Gewichtsanteile von (b1) und (b2) stets 100 Gew.-% ergibt und (a1), (a2), (a3), (b1) und (b2) in Art und Menge so ausgewählt werden, daß das Polyacrylatharz eine Hydroxylzahl von 0 bis < 40, vorzugsweise 5 bis 35, eine Säurezahl von 20 bis 100, vorzugsweise 25 bis 50 und eine Glasübergangstemperatur (T_{G}) von -40°C bis +60°C, vorzugsweise -20°C bis +40°C, aufweist.

2. Mischsystem nach Anspruch 1, dadurch gekennzeichnet, daß die verschiedenen Basisfarben A wasserfrei sind.

3. Mischsystem nach Anspruch 1 oder 2, dadurch gekennzeichnet, daß die Komponente B als Bindemittel mindestens ein Polyurethanharz und/oder Aminoplastharz und/oder Polyacrylatharz enthält.

4. Mischsystem nach einem der Ansprüche 1 bis 3, dadurch gekennzeichnet, daß die verschiedenen Basisfarben A jeweils
Aa) 0,5 bis 70 Gew.-% mindestens eines farb- und/oder effektgebenden Pigments,
Ab) 10 bis 80 Gew.-% mindestens eines wasserverdünnbaren oder wasserdispergierbaren Bindemittels und
Ac) mindestens ein organisches Lösemittel sowie ggf. Hilfs- und Zusatzstoffe
enthalten, wobei die Summe der Gewichtsanteile der Komponenten Aa bis Ac jeweils 100 Gew.-% beträgt.

5. Mischsystem nach einem der Ansprüche 1 bis 4, dadurch gekennzeichnet, daß das Mischsystem
A1) mindestens eine Effektpigmente enthaltende Basisfarbe,
A2) mindestens eine anorganische Farbpigmente enthaltende Basisfarbe und/oder
A3) mindestens eine organische Farbpigmente enthaltende Basisfarbe
enthält.

6. Mischsystem nach einem der Ansprüche 1 bis 5, dadurch gekennzeichnet, daß die verschiedenen Basisfarben A das gleiche Bindemittel oder bei Bindemittelmischungen die gleichen Bindemittel im gleichen Mischungsverhältnis zueinander enthalten.

7. Mischsystem nach einem der Ansprüche 1 bis 6, dadurch gekennzeichnet, daß die verschiedenen Basisfarben A das gleiche Verhältnis von festem Bindemittel zu organischem Lösungsmittel aufweisen und/oder daß das Verhältnis von festem Bindemittel zu Lösemittel im fertigen wäßrigen Überzugsmittel konstant ist.

8. Verfahren zur Herstellung von wasserverdünnbaren Überzugsmitteln mit genau festgelegter Tönung, bei dem verschiedene Basisfarben eines Mischsystems getrennt hergestellt und gelagert werden und erst kurz vor der Applikation des Überzugsmittels gemischt werden, dadurch gekennzeichnet, daß ein Mischsystem nach einem der Ansprüche 1 bis 7 eingesetzt wird und die wasserverdünnbaren Überzugsmittel durch Mischen mindestens einer Basisfarbe A und mindestens einer Komponente B des Mischsystems hergestellt werden.

9. Verwendung des Mischsystems nach einem der Ansprüche 1 bis 8 zur Herstellung von Wasserbasislacken für die Beschichtung von Automobilkarossen und/oder Kunststoffteilen.

10. Verwendung des Mischsystems nach einem der Ansprüche 1 bis 9 zur Herstellung von wäßrigen Überzugsmitteln für die Reparaturlackierung.

## Claims

1. Mixer system comprising the components A and B for the preparation of water-thinnable coating compositions with accurately defined colours, produced from various base colorants, characterized in that the mixer system comprises
A) various base colorants A which [lacuna] less than 5% by weight of water, at least one coloured and/or special effect pigment, an organic solvent, optionally auxiliary substances and additives and at least one water-thinnable or water-dispersible acrylicized polyurethane resin (A1) and/or at least one water-thinnable or water-dispersible polyacrylate resin (A2) and
B) at least one water-containing, pigment-free component B which comprises at least one rheology-controlling additive and also, if desired, at least one water-thinnable or water-dispersible binder and, optionally, further auxiliary substances and additives, the acrylicized polyurethane resin (A1) being obtainable by polymerizing, in an organic solvent or a mixture of organic solvents,
Ai) ethylenically unsaturated monomers or a mixture of ethylenically unsaturated monomers in the presence
Aii) of a polyurethane resin which [lacuna] a number-average molecular weight of from 200 to 30,000, preferably from 1000 to 5000 and which on average contains per molecule from 0.05 to 1.1, preferably from 0.2 to 0.9 and, with particular preference, from 0.3 to 0.7 polymerizable double bonds,
and the polyacrylate resin (A2) being obtainable by subjecting
(I) a mixture of
(a1) an essentially carboxyl-free (meth)acrylic ester which is copolymerizable with (a2), (a3), (b1) and (b2), or a mixture of such (meth)acrylic esters and, if desired,
(a2) an ethylenically unsaturated monomer which is copolymerizable with (a1), (a3), (b1) and (b2), carries at least one hydroxyl group per molecule and is essentially free from carboxyl groups, or a mixture of such monomers, and, if desired,
(a3) an ethylenically unsaturated monomer which is copolymerizable with (a1), (a2), (b1) and (b2) and is essentially free from carboxyl groups, or a mixture of such monomers
to an organic solvent or solvent mixture and subjecting them to polymerization in the presence of at least one polymerization initiator and,
(II) after at least 80% by weight of the mixture consisting of (a1), optionally (a2) and optionally (a3) has been added, adding
(b1) 60-100% by weight of an ethylenically unsaturated monomer which carries at least one carboxyl group per molecule and is copolymerizable with (a1), (a2) and (a3), or a mixture of such monomers together with
(b2) from 0 to 40% by weight of a carboxyl-free, ethylenically unsaturated monomer which is copolymerizable with (a1), (a2), (a3) and (b1), or a mixture of such monomers,
and continuing polymerization, the sum of the proportions by weight of (b1) and (b2) always being 100% by weight and the nature and amount of (a1), (a2), (a3), (b1) and (b2) being selected such that the polyacrylate resin has a hydroxyl number of from 0 to < 40, preferably from 5 to 35, an acid number of from 20 to 100, preferably from 25 to 50 and a glass transition temperature (T_{G}) of from -40°C to +60°C, preferably from -20°C to +40°C.

2. Mixer system according to Claim 1, characterized in that the various base colorants A are anhydrous.

3. Mixer system according to Claim 1 or 2, characterized in that the component B contains at least one polyurethane resin and/or amino resin and/or polyacrylate resin as binder.

4. Mixer system according to any one of Claims 1 to 3, characterized in that the various base colorants A contain in each case
Aa) 0.5 to 70% by weight of at least one coloured and/or special effect pigment,
Ab) 10 to 80% by weight of at least one water-thinnable or water-dispersible binder and
Ac) at least one organic solvent and, optionally, auxiliary substances and additives,
the sum of the proportions by weight of the components Aa to Ac being in each case 100% by weight.

5. Mixer system according to any one of Claims 1 to 4, characterized in that the mixer system comprises
A1) at least one base colorant containing special effect pigments,
A2) at least one base colorant containing inorganic coloured pigments and/or
A3) at least one base colorant containing organic coloured pigments.

6. Mixer system according to any one of Claims 1 to 5, characterized in that the various base colorants A contain the same binder or in the case of binder mixtures the same binders in identical mixing proportions with one another.

7. Mixer system according to any one of Claims 1 to 6, characterized in that the various base colorants A have the same ratio of solid binder to organic solvent and/or in that the ratio of solid binder to solvent in the finished aqueous coating composition is constant.

8. Process for the preparation of water-thinnable coating compositions with accurately defined colours, wherein various base colorants of a mixer system are prepared and stored separately and only mixed shortly before the application of the coating composition, characterized in that a mixer system according to any one of Claims 1 to 7 is used and the water-thinnable coating compositions are prepared by mixing at least one base colorant A and at least one component B of the mixer system.

9. Use of the mixer system according to any one of Claims 1 to 8 for the production of waterborne paints for the coating of automobile bodies and/or plastic components.

10. Use of the mixer system according to any one of Claims 1 to 9 for the preparation of aqueous coating compositions for refinishing.

## Revendications

1. Système mixte obtenu à partir des composants A et B pour la préparation d'agents de revêtements hydrodiluables ayant une teinte exactement déterminée, obtenue à partir de couleurs de base différentes, caractérisé en ce que le système mixte contient
A) des couleurs de base différentes A, qui contiennent moins de 5% en poids d'eau, au moins un pigment chromophore et/ou un pigment à effets, un solvant organique, le cas échéant des additifs et des adjuvants, ainsi qu'au moins une résine de polyuréthanne acrylique hydrodiluable ou hydrodispersible (A1) et/ou au moins une résine de polyacrylate hydrodiluable ou hydrodispersible (A2), et
B) au moins un composant B, exempt de pigments, contenant de l'eau, qui contient au moins un additif de contrôle de la rhéologique ainsi que, le cas échéant, au moins un liant hydrodiluable ou hydrodispersible et, le cas échéant, des additifs et des adjuvants supplémentaires, la résine de polyuréthanne acrylique (A1) pouvant être obtenue en procédant à la polymérisation, dans un solvant organique ou dans un mélange de solvants organiques,
(Ai) de monomères éthyléniquement insaturés ou d'un mélange de monomères éthyléniquement insaturés en présence
(Aii) d'une résine de polyuréthanne, qui présente un poids moléculaire au nombre de 200 à 30 000, de préférence de 1 000 à 5 000 et contient en moyenne statistique par molécule de 0,05 à 1,1, de préférence de 0,2 à 0,9, en particulier de préférence de 0,3 à 0,7 liaisons doubles polymérisables,
et la résine de polyacrylate (A2) pouvant être obtenue en ajoutant, à un solvant organique ou à un mélange de solvants organiques,
(I) un mélange
(a1) d'un ester de l'acide (méth)acrylique, essentiellement exempt de groupements carboxyle, copolymérisable avec (a2), (a3), (b1) et (b2), ou d'un mélange d'esters de l'acide (méth)acrylique de ce genre et, le cas échéant,
(a2) d'un monomère éthyléniquement insaturé, copolymérisable avec (a1), (a3), (b1) et (b2), qui porte au moins un groupement hydroxyle par molécule et qui est pour l'essentiel exempt de groupements carboxyle, ou d'un mélange de monomères de ce genre et,
le cas échéant,
(a3) d'un monomère éthyléniquement insaturé, pour l'essentiel exempt de groupements carboxyle, copolymérisable avec (a1), (a2), (b1) et (b2), ou d'un mélange de monomères de ce genre et
en procédant à la polymérisation en présence d'au moins un agent initiateur de polymérisation et
(II) après avoir ajouté au moins 80% en poids du mélange se composant de (a1), le cas échéant de (a2), et le cas échéant de (a3), en ajoutant
(b1) 60 - 100% en poids d'un monomère éthyléniquement insaturé, copolymérisable avec (a1), (a2) et (a3), portant au moins un groupement carboxyle par molécule, ou d'un mélange de monomères de ce genre à
(b2) de 0 à 40% en poids d'un monomère éthyléniquement insaturé, copolymérisable avec (a1), (a2), (a3), et (b1), exempt de groupements carboxyle, ou d'un mélange de monomères de ce genre
et en poursuivant la polymérisation, la somme des proportions en poids de (b1) et de (b2) donnant à chaque fois 100% en poids, et (a1), (a2), (a3), (b1) et (b2) étant choisis en nature et en quantité de telle sorte que la résine de polyacrylate présente un indice hydroxyle de 0 à < 40, de préférence de 5 à 35, un indice d'acidité de 20 à 100, de préférence de 25 à 50 et une température de transition vitreuse (T_{G}) de -40°C à +60°C, de préférence de -20°C à +40°C.

2. Système mixte selon la revendication 1, caractérisé en ce que les différentes couleurs de base A sont exemptes d'eau.

3. Système mixte selon la revendication 1 ou 2, caractérisé en ce que le composant B contient, en tant que liant, au moins une résine de polyuréthanne et/ou une résine aminoplaste et/ou une résine de polyacrylate.

4. Système mixte selon l'une quelconque des revendications 1 à 3, caractérisé en ce que les différentes couleurs de base A contiennent à chaque fois
Aa) de 0,5 à 70% en poids d'au moins un pigment chromophore et/ou d'un pigment à effets,
Ab) de 10 à 80% en poids d'au moins un liant hydrodiluable ou hydrodispersible et
Ac) au moins un solvant organique ainsi que, le cas échéant, des additifs et des adjuvants,
la somme des proportions en poids des composants Aa à Ac étant à chaque fois de 100% en poids.

5. Système mixte selon l'une quelconque des revendications 1 à 4, caractérisé en ce que le système mixte contient
A1) au moins une couleur de base contenant un pigment à effets,
A2) au moins une couleur de base contenant un pigment de couleur inorganique et/ou
A3) au moins une couleur de base contenant un pigment de couleur organique.

6. Système mixte selon l'une quelconque des revendications 1 à 5, caractérisé en ce que les différentes couleurs de base A contiennent le même liant A, ou pour des mélanges de liants, les mêmes liants dans le même rapport de mélange les uns par rapport aux autres.

7. Système mixte selon l'une quelconque des revendications 1 à 6, caractérisé en ce que les différentes couleurs de base A présentent le même rapport liant solide à solvant organique et/ou en ce que le rapport liant solide à solvant dans l'agent de revêtement aqueux fini est constant.

8. Procédé pour la préparation d'agents de revêtement hydrodiluables ayant une teinte exactement déterminée, lors duquel les différentes couleurs de base d'un système mixte sont préparées et stockées séparément et ne sont mélangées que peu de temps avant l'application de l'agent de revêtement, caractérisé en ce qu'un système mixte selon l'une quelconque des revendications 1 à 7 est utilisé et que les agents de revêtement hydrodiluables sont préparés par mélange d'au moins une couleur de base A et d'au moins un composant B du système mixte.

9. Utilisation du système mixte selon l'une quelconque des revendications 1 à 8 pour la préparation de vernis de base aqueux pour le revêtement de carrosseries d'automobile et/ou de pièces en matière synthétique.

10. Utilisation du système mixte selon l'une quelconque des revendications 1 à 9 pour la préparation d'agents de revêtement aqueux pour le vernissage de réparation.
